# EUROPEAN PATENT APPLICATION

(11) **EP 4 108 630 A1**
(43) Date of publication of application: **28.12.2022**
(21) Application number: 21305877.9
(22) Date of filing: 25.06.2021
(51) Int. Cl.: C01B 3/00, C01B 3/06, C08G 77/06, C08G 77/12, C08G 77/14, C08G 77/24, C08G 77/60, C08L 83/08

(54) **HYDROGEN CARRIER COMPOUNDS**

(71) Applicant: Hysilabs, SAS, 13100 Aix-en-Provence (FR)
(72) Inventor: DE MASI, Deborah, 57050 Plappeville (FR); BURCHER, Benjamin, 74410 Saint-Jorioz (FR); BENOIT, Remy, 304 Villeneuve-les-Avignon (FR); LOME, Vincent, 13002 Marseille (FR)
(74) Representative: De Kezel, Eric

(57) **Abstract**

The present invention relates to novel branched hydrogen carrier compounds and to a method for producing hydrogen from said branched hydrogen carrier compounds. The present invention also relates to a process for producing and for regenerating said branched hydrogen carrier compounds.

## Description

The present invention relates to novel hydrogen carrier compounds and to a method for producing hydrogen from said hydrogen carrier compounds. The present invention also relates to a process for producing and for regenerating said hydrogen carrier compounds. The ability to store, transport and release hydrogen in a safe, convenient, and environment-friendly manner source and to produce and store hydrogen efficiently, economically and safely, are main challenges to be overcome in order to democratize the use of hydrogen as an energy vector.

Currently hydrogen is mainly delivered either by pipeline, by tube trailers as a compressed gas or by special tankers in its liquefied form.

There are typically six routes for hydrogen delivery: it can be transported as a gas by pipeline, it can be produced on site, it can be transported as a compressed gas in tube trailers (for example as disclosed in WO2013/109918 (A1)), it can be transported as a condensed liquid in cryogenic trucks (for example as disclosed in WO2011/141287 (A1)), it can be stored in a solid-state hydrogen carrier material and released on-site (for example as disclosed in WO2009/080986 (A2)), and stored in a liquid-state hydrogen carrier material and released on-site.

Hydrogen can be produced on-site by two means. It can be produced on site by one process and directly consumed in another process which is defined as captive hydrogen. The other mean of on-site production is by water electrolysis, which produces hydrogen from water and electricity. It can be considered producing an environment-friendly hydrogen if powered by renewable energy.

In addition to incumbent delivery solutions which are cryogenic and compressed hydrogen, alternative solutions are emerging to provide hydrogen: hydrogen carriers. Hydrogen carriers are either solid-state or liquid-state materials that have the ability to store hydrogen and release it when needed. They bring advantages either for transport or storage, compared to incumbent solutions. Solid-state carriers include metallic hydrides enabling the uptake of hydrogen, by adsorption onto metal particles resulting in metal hydride. Among them, the magnesium hydride is stable at low pressure and standard temperature, making it convenient to transport and store. When needed, the material is heated to release the hydrogen gas. Solid-state solutions have been identified as best suited for same-site reversible processes of energy storage from renewable energies. Indeed, handling solid materials is not as convenient as handling gas or liquid ones.

Liquid hydrogen carriers can be any liquid-state material able to release hydrogen under specific conditions. The class of Liquid Organic Hydrogen Carriers (LOHC) is the most represented among the liquid hydrogen carriers. During the process called hydrogenation, which is a catalytic reaction, requiring energy in the form of heat, hydrogen is chemically bonded to the liquid organic carrier. Typically, the carrier, being unsaturated and/or aromatic hydrocarbons such as toluene, is reacted with hydrogen to produce the corresponding saturated hydrocarbon, to be transported in a liquid-sate at standard temperature and pressure, for example as described in WO2014/082801(A1) or WO2015/146170(A1). Although the amount of hydrogen to be stored in LOHC depends on the yield of the hydrogenation process it is up to 7.2% mass of hydrogen contained per mass of liquid carrier. Then the hydrogen is released from the saturated hydrocarbons by a process called dehydrogenation, which is a catalytic reaction, requiring additional energy in the form of heat (above 300°C typically) due to the endothermic nature of the reaction. In order to produce on-demand hydrogen, heat may be produced from grid electricity (without control on its origin and on its impact on the environment) or heat may be retrieved by burning a part of the organic carrier.

Patent applications WO2010070001(A1), EP2206679(A1), WO2011098614(A1) and WO2010094785(A1) relate to a method for producing hydrogen from compounds (C) comprising one or more groups Si-H, for example from

| | | | |
|---|---|---|---|
| 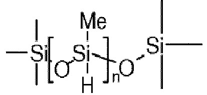 | Polymethyl hydrosiloxane ("PHMS") | 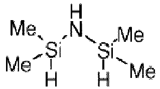 | 1 ,1 ,3, 3-tetramethyl disilazane |
| 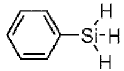 | phenyl silane | 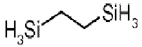 | 1 ,4-disilabutane |
| 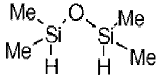 | Tetramethyl disiloxane | 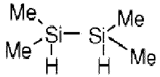 | tetramethyl disilane |
| 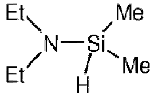 | N,N-diethyl-1,1-dimethylsilylamine | 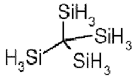 | Tetrasilylmethane |

Their overall regeneration method of the hydrogen-based carrier (e.g. according to both WO2011098614 (A1) and WO2010094785 (A1)) requires the use of the expensive LiAlH₄ reducing agent leading to aluminium oxide by-products, which retreatment process is energy-consuming (a lot of electricity is needed for the electrolysis step), is polluting, and releases carbon dioxide (CO2), carbon monoxide (CO), fluorinated effluents and polycyclic aromatic hydrocarbons (PAH); indicating that there is still some progress to be made in order to develop a more environmentally friendly and carbon-free regeneration method applicable to hydrogen-based carrier.

Our prior inventions, Hysilabs WO2019211300, WO2021084044, WO2019211301 and WO2021084046 relate to liquid siloxane hydrogen carrier compounds and to a process for producing and for regenerating siloxane hydrogen carrier compounds.

Whilst these late technologies already represent a breakthrough in the field of hydrogen-based carrier system that releases hydrogen on-demand, it would be beneficial to develop alternative techniques, said techniques further exhibiting improved efficiency, performance, and cost effectiveness.

Thus, there remains a need for further improvements in efficiency, performance, and cost effectiveness of such clean energy vectors, for a variety of applications, such as hydrogen delivery and hydrogen infrastructure building. There remains a need for improvements which exhibit greater amounts of hydrogen to be transported, enhanced efficiency, performance and that are cost effective. There remains a critical need for environment-friendly liquid-state hydrogen carriers that are able to release on-demand hydrogen without the need for additional energy. In addition, there remains a need for an integrated clean process wherein hydrogen carriers can not only be used as a valuable hydrogen source but also be produced without requiring carbon containing reactant and/or without carbon emissions, and also be regenerated from the by-products of the hydrogen separation environmentally friendly and without substantial carbon emissions, preferably without carbon emissions.

### Invention

### Novel hydrogen carrier compounds

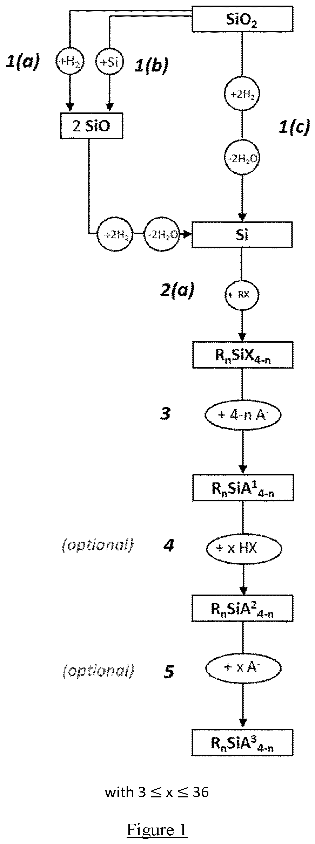

The present invention relates to hydrogen carrier compounds, preferably liquid hydrogen carrier compounds. Said claimed compounds are illustrated in Figures 1 to 6 which represent schemes of the process for the production or regeneration of said claimed branched hydrogen carrier compounds.

Said hydrogen carrier compounds are selected amongst the following compounds 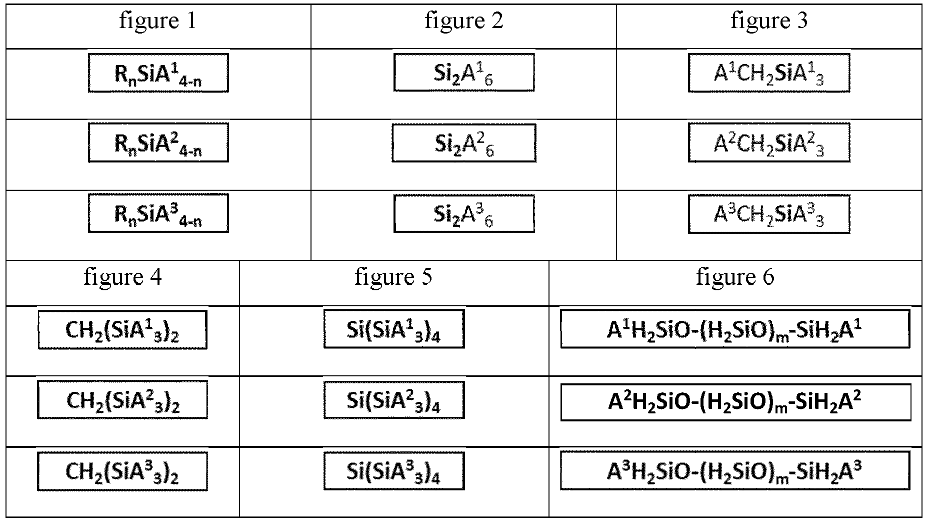 wherein
R can be any of hydrogen or a radical having up to 50 carbon atoms chosen amongst alkyl, aryl and aralkyl,
n can be any of 0, 1, 2 or 3,
m is any integer comprised between 1 and 100,
wherein A¹ is selected from

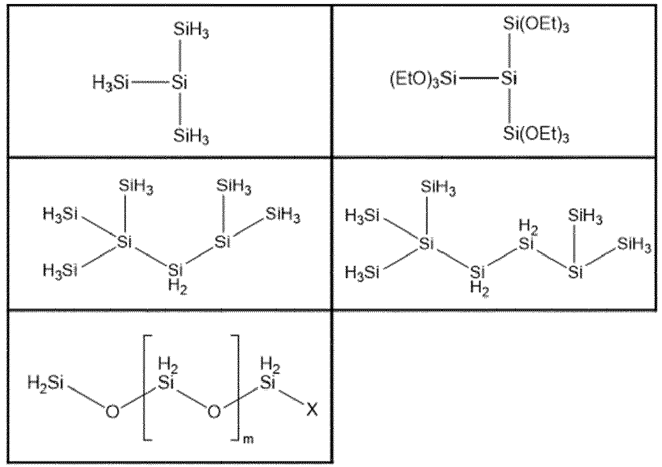

wherein A² is selected from

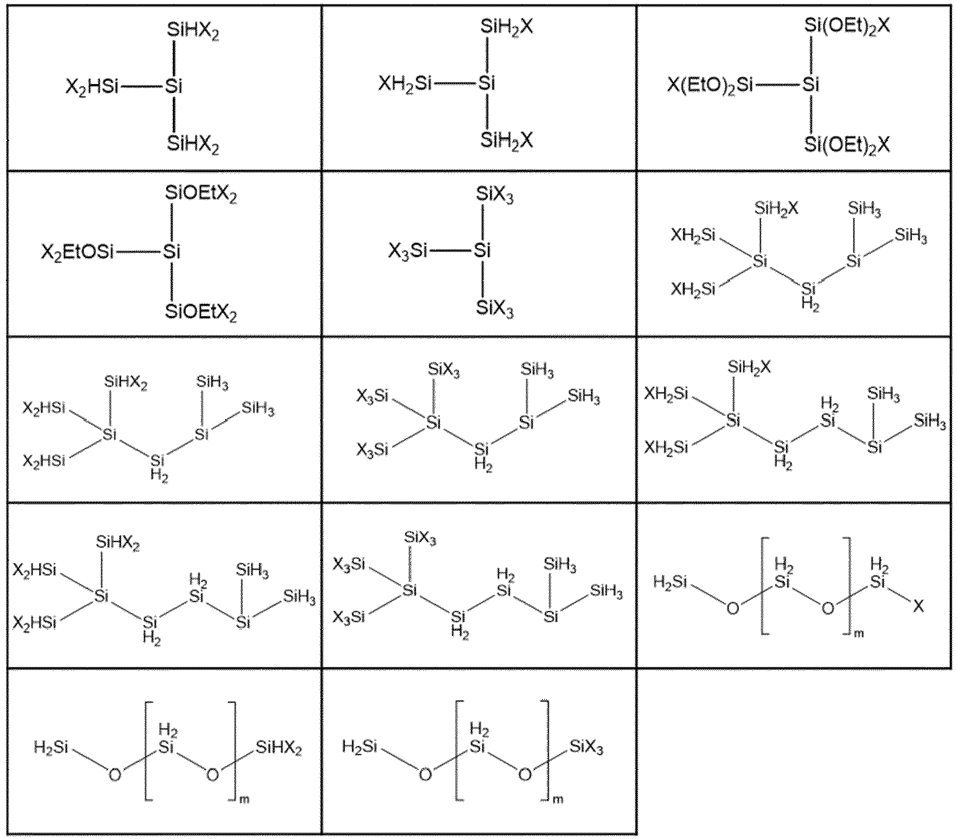

wherein X in A¹ or A² can be any halide, for example any of a chloride, a bromide, a fluoride, or an iodide,
wherein A³ is selected from

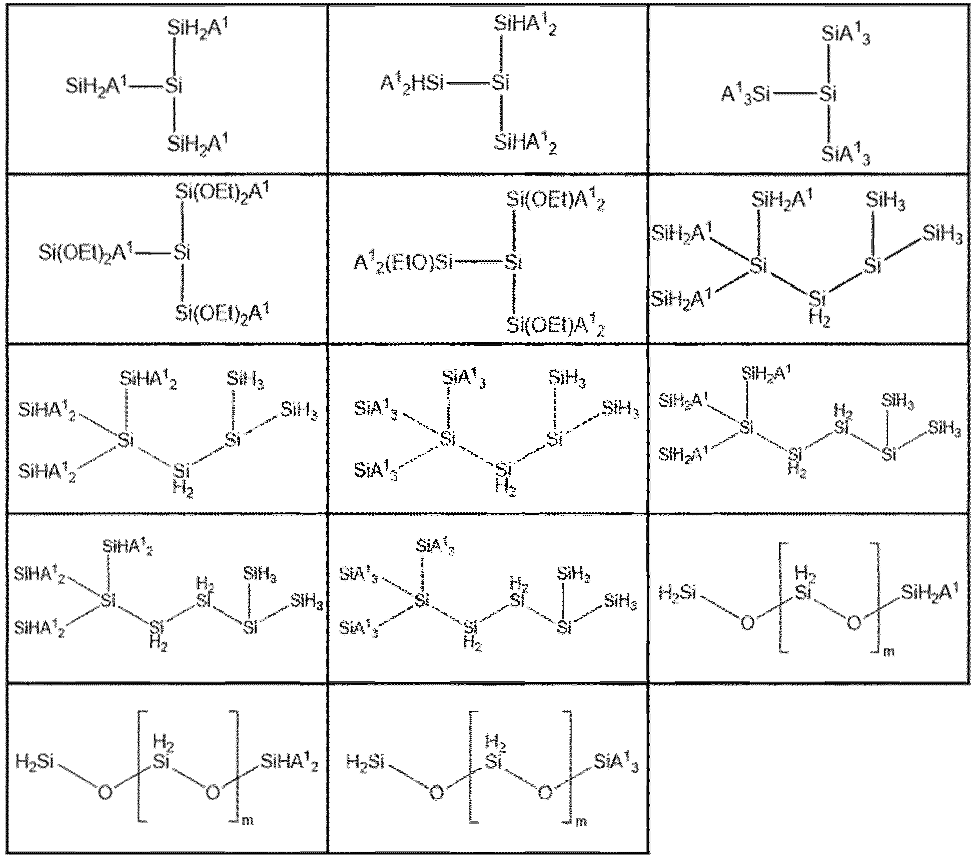

and wherein m in A¹, A² or A³ is any integer comprised between 1 and 100.

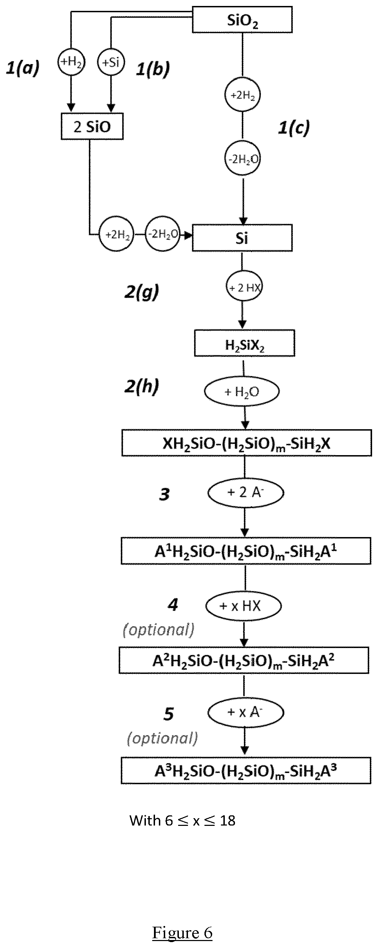

For the avoidance of doubt, the value of the integer m of the compounds from figure 6 can be the same or different from the value of the integer m from A¹ and/or from A² and/or from A³; and X of A¹ can be the same or different from X of A² .

The term "hydrogen carrier compound" which is thoroughly used in the present invention can be understood as a chemical compound able to store hydrogen, transport hydrogen and release hydrogen on demand; the characteristic of the hydrogen carrier compounds according to the present invention is that they can store/transport/release hydrogen without requiring any energy input (e.g. heat, electrical power etc...).

In an embodiment according to the present invention, the claimed novel hydrogen carrier compounds are named as branched polysilanes and/or branched polysiloxanes and/or halogenated branched polysilanes and/or halogenated branched polysiloxanes and/or organo-branched polysilanes and/or organo-branched polysiloxanes.

Whilst not wishing to be bound by the explanation, the Applicants have unexpectedly found that the claimed compounds were excellent alternative candidates for the release of hydrogen. Indeed, for the man skilled in the art, the steric hindrance of the claimed branched hydrogen carrier compounds was expected to yield solids or gels rather unreactive regarding hydrogen release; it was surprisingly found that these compounds offer high reactivity towards hydrolysis while remaining liquid, even when high molar masses were reached. In addition, the Applicants have unexpectedly found that these highly branched hydrogen carrier compounds remain stable when exposed to ambient air which represents a tremendous advantage compared to other silicon containing hydrogen carrier compounds. In addition, as explained hereafter, the Applicants have developed a corresponding preparation process which can deliver such high degree of branching in a limited number of chemical steps; preparation process which is further very flexible because isolated branches of the hydrogen carrier compounds can be further functionalized by performing additional branching steps as explained hereafter.

In an embodiment according to the present invention, the claimed branched hydrogen carrier compounds are liquid (at normal temperature and pressure (NTP); e.g. at a temperature of 20 °C and an absolute pressure of 1.01325 × 105 Pa).

Illustrative examples of the claimed branched hydrogen carrier compounds according to the present invention are:
HₙSiA¹₄₋ₙ; HₙSiA²_{4-n.}; HₙSiA³₄₋ₙ; (CH₃)ₙSiA¹₄₋ₙ; (CH₃)ₙSiA¹_{4-n.}; (CH₃)ₙSiA³₄₋ₙ ; CH₂(SiA¹₃)₂; CH₂(SiA²₃)₂; CH₂(SiA³₃)₂;
Si₂A¹₆; Si₂A²₆; Si₂A³₆;
Si(SiA¹₃)₄; Si(SiA¹₃)₄; Si(SiA¹₃)₄;
or a mixture of two or more of these compounds, with A¹, A² and A³ selected from

| A¹ | A² | A³ |
|---|---|---|
| 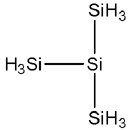 | 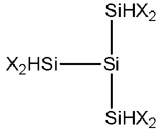 | 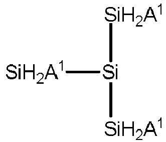 |
| | 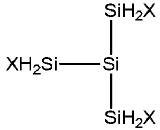 | 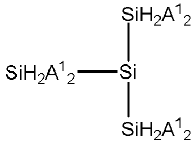 |
| | 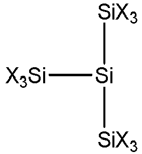 | 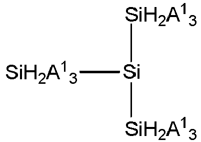 |

wherein n can be any of 0, 1, 2 or 3, and X can be any halide, for example any of a chloride, a bromide, a fluoride, or an iodide.

Further illustrative examples of the claimed branched hydrogen carrier compounds according to the present invention are: 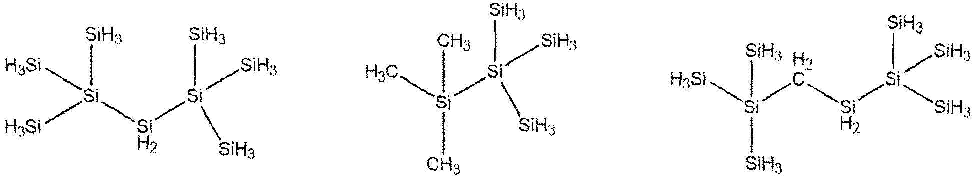 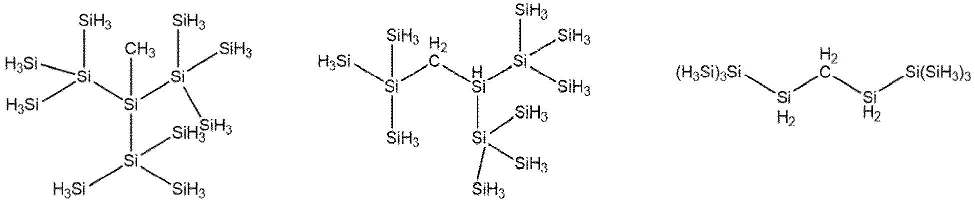 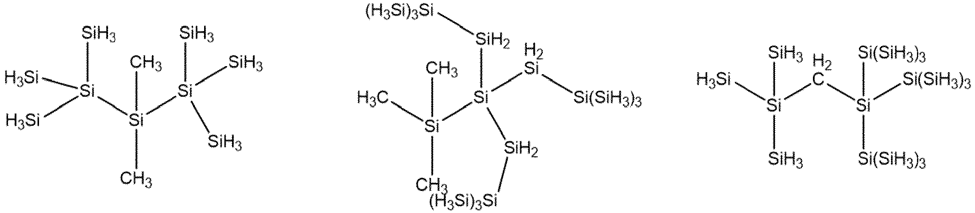 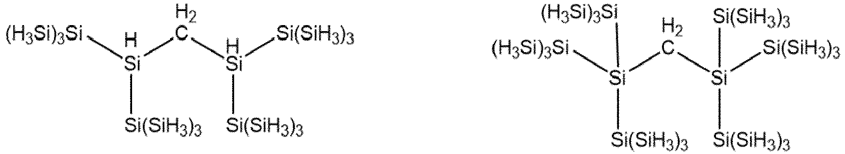 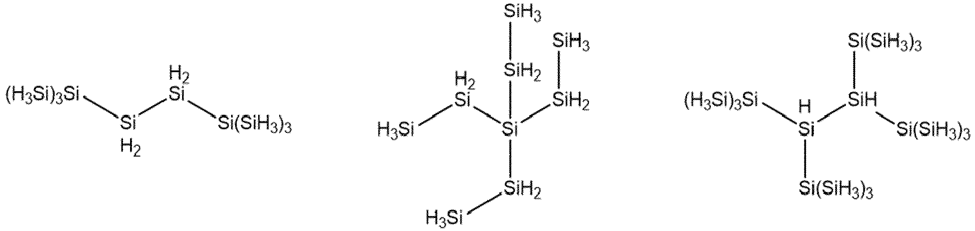 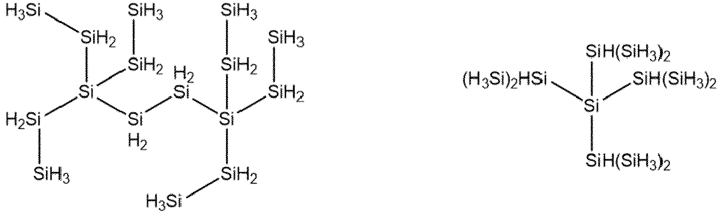 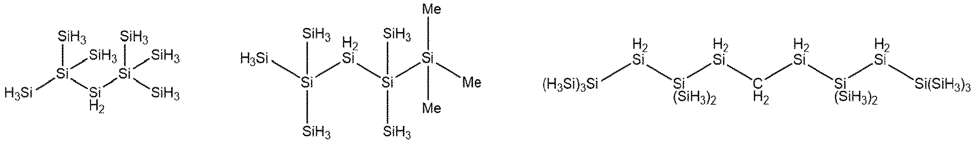 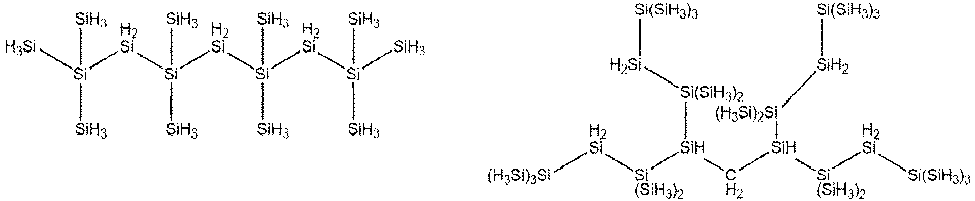 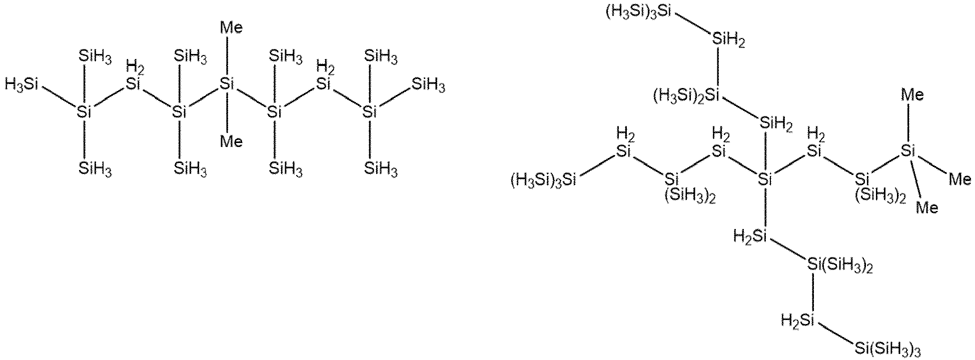 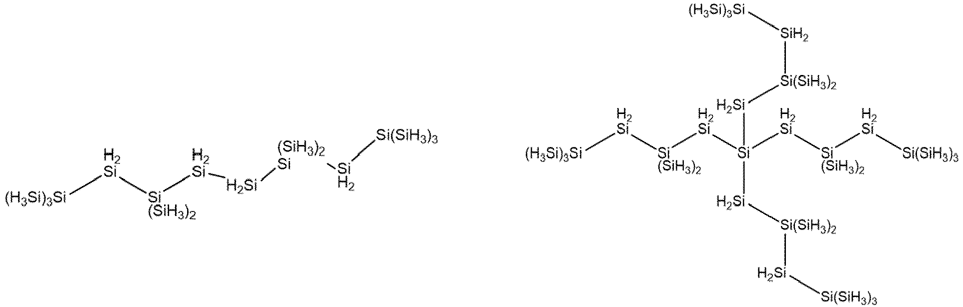 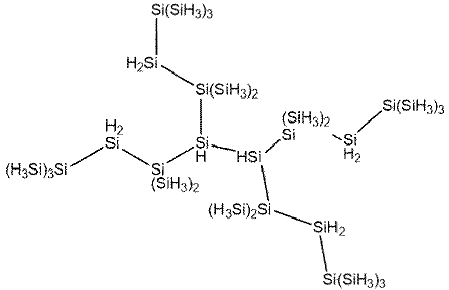 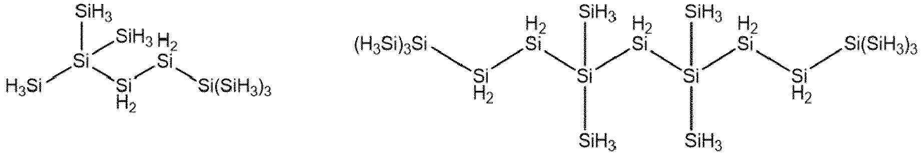 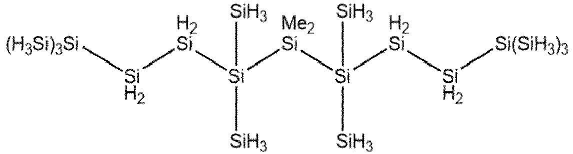 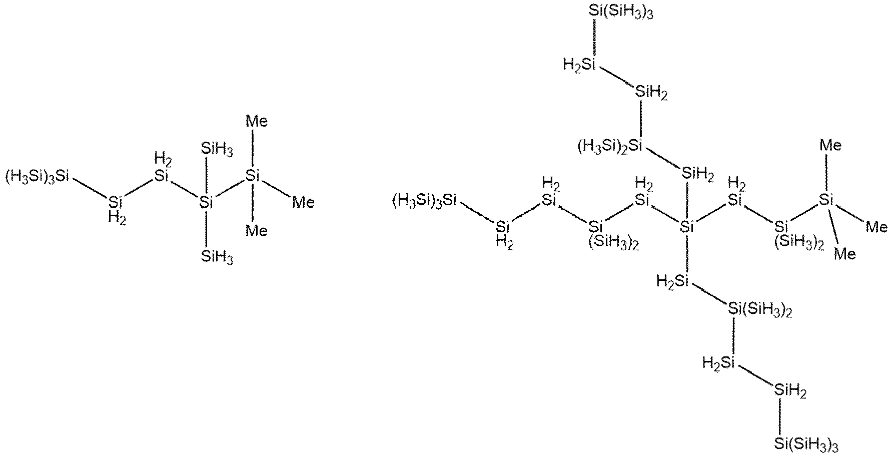 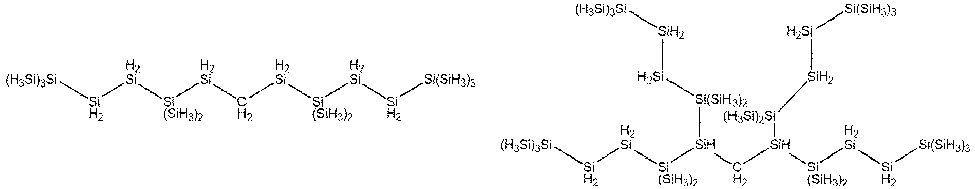 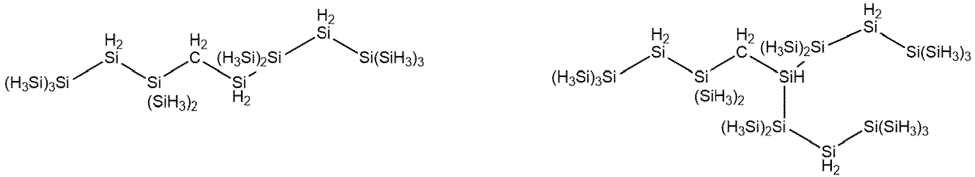 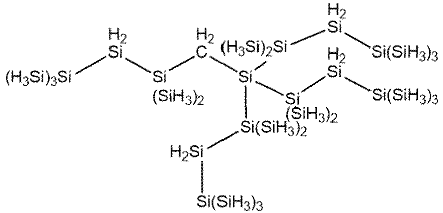 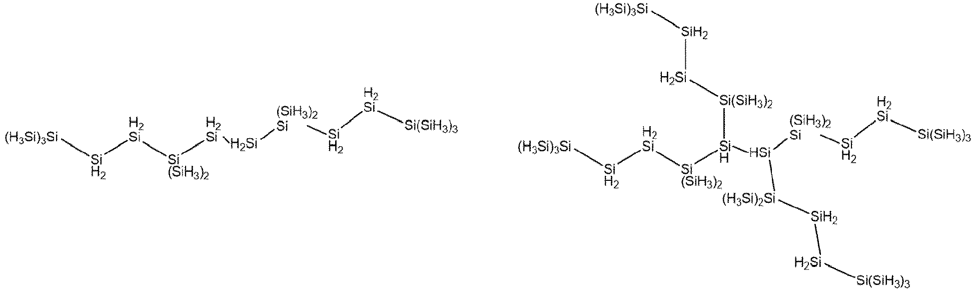 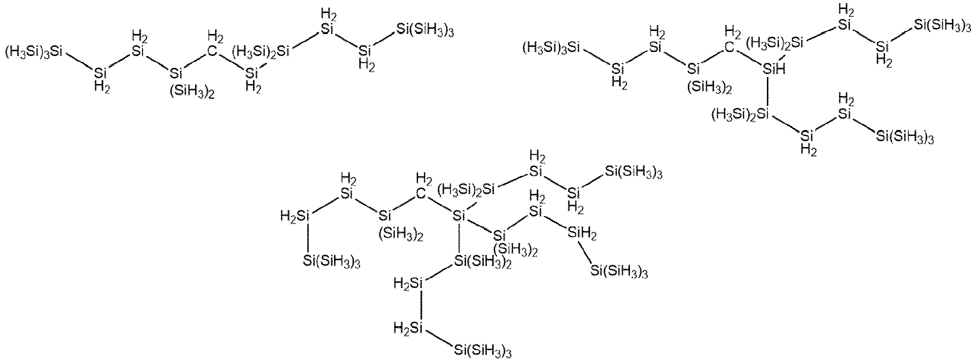 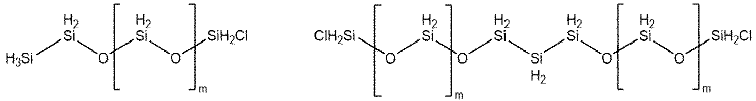 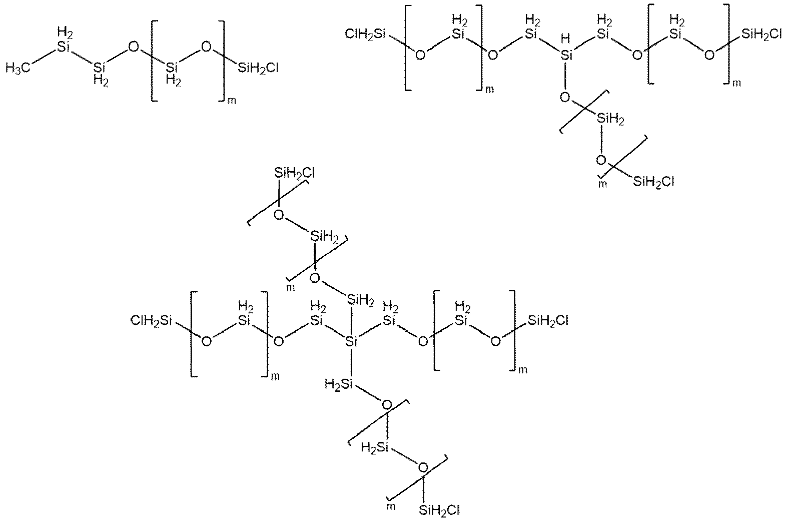 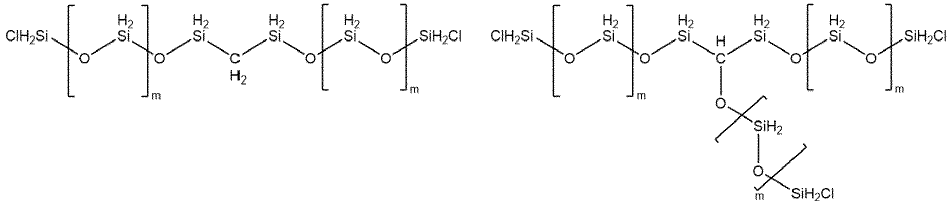 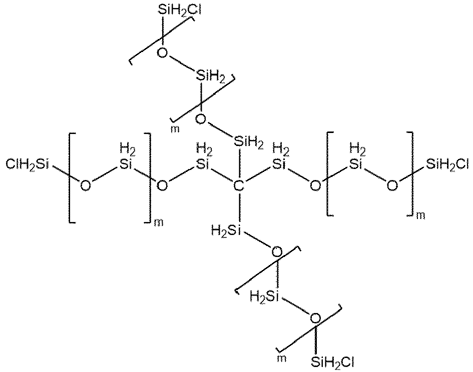 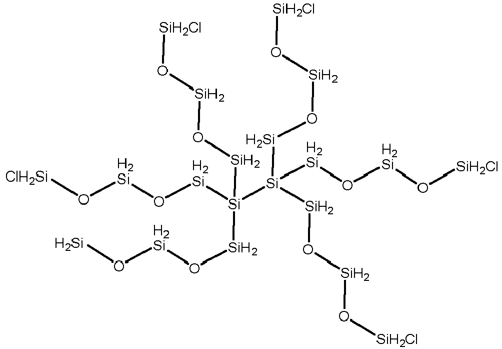 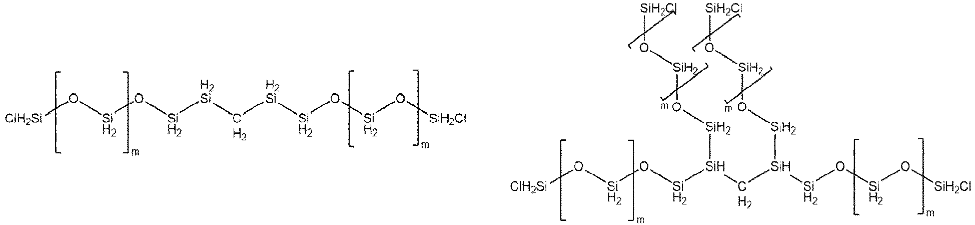 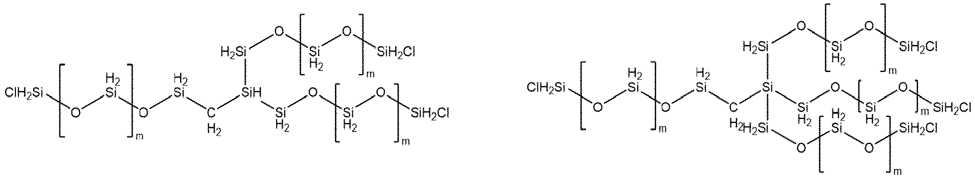 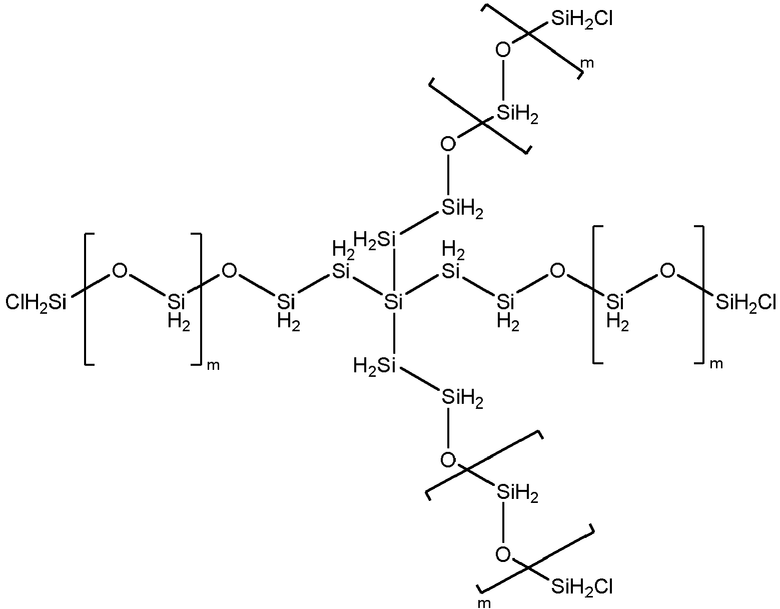 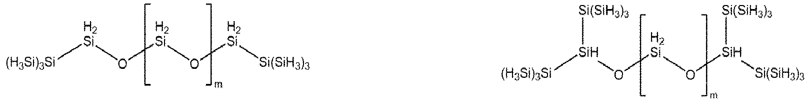 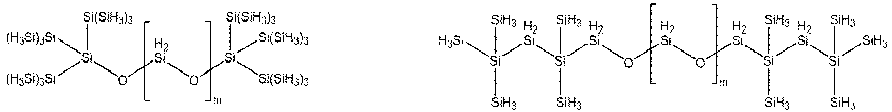 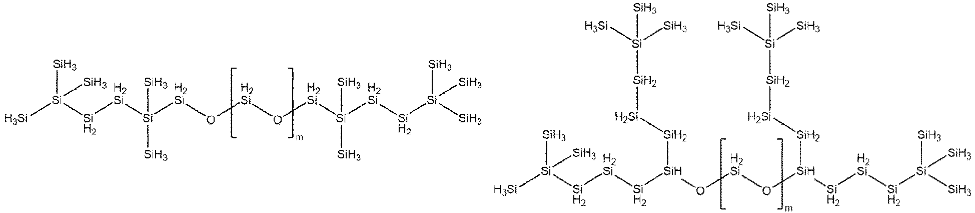 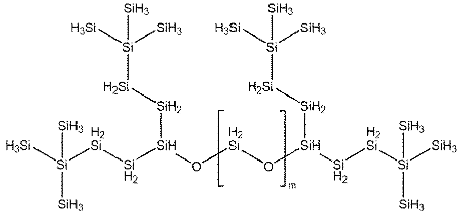 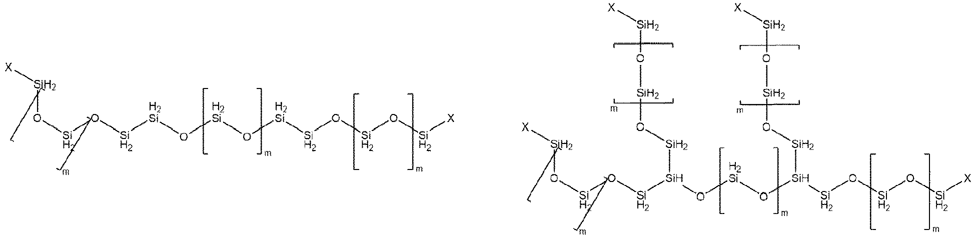 wherein m is any integer comprised between 1 and 100,
or a mixture of two or more of these compounds.

In an embodiment according to the present invention, the molecular weight of the claimed branched hydrogen carrier compounds may range from 152 to 10 212 g/mol. The molecular weight of the claimed branched hydrogen carrier compounds of formula (II) can be measured according to any appropriate method; for example, it can be determined by GC-MS, e.g. a GC-MS analysis performed on an Agilent GC/MSD 5975C apparatus.

In an embodiment according to the present invention, the claimed branched hydrogen carrier compounds present a characteristic strong and sharp absorption band between 800 and 1000 cm⁻¹ corresponding to the SiH₂ units, when analysed by FT-IR.

In an embodiment according to the present invention, the claimed branched hydrogen carrier compounds present a characteristic resonance between 3.5 and 4.0 ppm corresponding to the SiH₂Si units, when analysed by 1H NMR in C₆D₆ at 25°C. 1H NMR analyses can be performed on any appropriate spectrometer, e.g. a 400 MHz Bruker spectrometer. In an embodiment according to the present invention, the claimed branched hydrogen carrier compounds present a characteristic resonance between -85 and -89 ppm corresponding to the SiH₂Si units, when analysed by ²⁹Si NMR in CDCl₃ at 25°C. ²⁹Si NMR analyses can be performed on any appropriate spectrometer, e.g. a 400 MHz Bruker spectrometer.

In an embodiment according to the present invention, the claimed branched hydrogen carrier compounds present a characteristic resonance between -140 and -160 ppm corresponding to the SiSi₄ units, when analysed by ²⁹Si NMR in CDCl₃ at 25°C. ²⁹Si NMR analyses can be performed on any appropriate spectrometer, e.g. a 400 MHz Bruker spectrometer.

In an embodiment according to the present invention, the claimed branched hydrogen carrier compounds present a characteristic resonance between 3.48 and 3.5 ppm corresponding to the SiH₃ units, when analysed by 1H NMR in C₆D₆ at 25°C. 1H NMR analyses can be performed on any appropriate spectrometer, e.g. a 400 MHz Bruker spectrometer. In an embodiment according to the present invention, the claimed branched hydrogen carrier compounds present a characteristic resonance between -87 and -93 ppm corresponding to the SiH₃ units, when analysed by ²⁹Si NMR in CDCl₃ at 25°C. ²⁹Si NMR analyses can be performed on any appropriate spectrometer, e.g. a 400 MHz Bruker spectrometer.

In an embodiment according to the present invention, the claimed branched hydrogen carrier compounds present a characteristic resonance between -34 and -41 ppm corresponding to the Si(OCH₃)₃ units, when analysed by ²⁹Si NMR in CDCl₃ at 25°C.

In an embodiment according to the present invention, the claimed branched hydrogen carrier compounds present a characteristic resonance between 9 and 10 ppm corresponding to the SiCl₃ units, when analysed by ²⁹Si NMR in CDCl₃ at 25°C.

In an embodiment according to the present invention, the claimed branched hydrogen carrier compounds present a characteristic resonance between -82 and -86 ppm corresponding to the Si(SiCl₃)₃ units, when analysed by ²⁹Si NMR in CDCl₃ at 25°C.

In an embodiment according to the present invention, the claimed branched hydrogen carrier compounds present a characteristic resonance between 4.5 and 4.9 ppm corresponding to the SiH₂O units, when analysed by 1H NMR in C₆D₆ at 25°C. 1H NMR analyses can be performed on any appropriate spectrometer, e.g. a 400 MHz Bruker spectrometer. In an embodiment according to the present invention, the claimed branched hydrogen carrier compounds present a characteristic resonance between -45 and -50 ppm corresponding to the SiH₂O units, when analysed by ²⁹Si NMR in CDCl₃ at 25°C.

### Reacting Mixture

In an embodiment, the present invention also relates to a hydrogen carrier compound reacting mixture comprising the claimed branched hydrogen carrier compound(s) and a proton source. For the purpose of the hydrogen production process according to the present invention, said proton source is considered as a reactant. Water is preferred as proton source. Water can advantageously be selected from various sources such as for example fresh water, running water, tap water, salt water, deionized water and/or distilled water.

In an embodiment of the present invention, the said mixture of the claimed branched hydrogen carrier compounds and proton source is characterised by a proton source /[(-SiH-) plus (-Si-Si-) bonds] molar ratio which is superior or equal to 0.1. In an embodiment of the present invention, the said mixture of the claimed branched hydrogen carrier compounds and proton source is characterised by a proton source /[(-SiH-) plus (-Si-Si-) bonds] molar ratio which is comprised between 1 and 10, for example between 1 and 3. For the avoidance of doubt, when a (-SiH₃) bond is present in a claimed compound according to the present invention, for the above molar ratio calculation, it is considered as three (-SiH-) bonds; similarly, when a (-SiH₂-) bond is present in a claimed compound according to the present invention, it is considered as a two (-SiH-) bonds in the above molar ratio calculation.

As an example, in a mixture comprising A moles of Si-H bonds and B moles of Si-Si bonds and n moles of proton source, the proton source /[(-SiH-) plus (-Si-Si-) bonds] molar ratio is calculated as [n / (A + B)].

As a practical example, when 31 moles of a proton source (e.g. water) is reacted with 1 mole of our claimed compound (H₃Si)₃Si-SiH₂-SiH₂-Si(SiH₃)₃, the following calculation applies: as our claimed compound comprises respectively 6 H3Si which correspond to 18 (-SiH-) bonds, 2 (-SiH₂-) bonds which correspond to 4 (-SiH-) bonds, i.e. 22 Si-H bonds in total and 9 Si-Si bonds, hence a total of 31 [(-SiH-) plus (-Si-Si-) bonds], the molar ratio is [31 / (22 + 9) x 1] = 1.

As another practical example, when a mixture of 1 mole of the molecule (H₃Si)₃Si-SiH₂-Si(SiH₃)₂-SiMe₃ comprising 17 Si-H bonds and 8 Si-Si bonds, hence a total of 25 [(-SiH-) plus (-Si-Si-) bonds] and 1 mole of the molecule Si(SiH(SiH₃)₂)₄ comprising 28 Si-H bonds and 16 Si-Si bonds, hence a total of 44 [(-SiH-) plus (-Si-Si-) bonds], is contacted with 69 moles of proton source, the proton source/[(-SiH-) plus (-Si-Si-) bonds] molar ratio is [69 / (25 x 1 +44x 1)] = 1.

In an embodiment, the present invention also relates to a hydrogen carrier compound reacting mixture comprising the claimed branched hydrogen carrier compound(s) and at least one hydrogen release initiator, and optionally and preferably the proton source (e.g. water). For the purpose of the hydrogen production process according to the present invention, said hydrogen release initiator is considered as a reagent. There is no restriction regarding the type of hydrogen release initiator which can be used according to the present invention as long as it favours the hydrolytic oxidation of the claimed branched hydrogen carrier compound(s); and thus the reaction leading to the corresponding hydrogen release. For example, any compound which will favour the hydrolytic oxidation of the claimed branched hydrogen carrier compound can advantageously be used as hydrogen release initiator.

In an embodiment according to the present invention, the hydrogen release initiator is selected amongst one or more compounds of the following list:
- a mineral base. For example, the mineral base can be an alkaline or alkaline-earth metal hydroxide such as potassium hydroxide or sodium hydroxide, the sodium hydroxide being particularly preferred;
- a compound able to release a nucleophile able to perform the hydrolytic oxidation of the silane hydrogen carrier compound such as, for example, a compound of formula RR'R"R'''ZY with Z being N or P, Y being OH, F, Cl or Br and R, R', R" and R''' can be advantageously selected amongst C₁-C₁₅ alkyl or C₆-C₁₀ aryl, with R, R', R", R''' being the same of different;
- a protic acid. For example, the protic acid can be a mineral acid or an organic acid; e.g. hydrochloric acid, sulfuric acid, carboxylic acids (methanoic, ethanoic acid...) etc...;
- a homogeneous organometallic catalyst able to promote the hydrolytic oxidation of the silane hydrogen carrier compound such as, for example, organometallic complexes based on iron, ruthenium, rhenium, rhodium, copper, chromium, iridium, zinc, and/or tungsten, etc...; and
- a heterogeneous catalyst able to promote the hydrolytic oxidation of the silane hydrogen carrier compound such as, for example, metal nanoparticles, [M/AlO(OH), M = Pd, Au, Rh, Ru, and Cu], Pd/C and/or any of the aforementioned metal preferably immobilized on an inorganic support.

In an embodiment of the present invention the hydrogen release initiator is selected amongst carbon-free hydrogen release initiator, e.g. sodium hydroxide.

In an alternative or additional embodiment to the hydrogen release initiator one, the present invention may also advantageously use UV light irradiation in order to break the Si-Si bonds and release hydrogen in the presence of the proton source (e.g. water) to form silica. Two lights sources can advantageously be used for such UV light irradiations: polychromatic lights froms Xe lamp or Hg-Xe lamp with a power comprised between 35 and 150 W and with a wavelength comprised between 254 and 390 nm.

In an embodiment, the present invention also relates to a hydrogen carrier compound reacting mixture comprising the claimed branched hydrogen carrier compound(s) (or the claimed blend) and a catalyst C, and optionally a hydrogen release initiator as defined above and, optionally and preferably a proton source (e.g. water). For the purpose of the hydrogen production process according to the present invention, said catalyst C is considered as a reagent. There is no restriction regarding the type of catalyst C which can be used according to the present invention as long as it increases the kinetic (i.e. the speed at which the hydrogen is released) of the hydrolytic oxidation of the claimed branched hydrogen carrier compounds; and thus the resulting reaction leading to the corresponding hydrogen release. For example, any compound which will significantly increase the kinetic of the hydrolytic oxidation of the claimed branched hydrogen carrier compound(s) can advantageously be used as catalyst C.

In an embodiment according to the present invention, the catalyst C is selected amongst one or more compounds of the following list:
- a phosphorous based catalyst (for example a polymer-supported catalyst bearing one or more phosphorous groups);
- an amine based catalyst (for example a polymer-supported catalyst bearing one or more amine groups), or an ammonium salt, for example RR'R"R"'NOH with R, R', R", R''' being a C₁-C₁₅ alkyl or a C₆-C₁₀ aryl, and R, R', R", R''' being the same of different;
- fluoride ions source catalyst (for example tetrabutylammonium fluoride); and
- hexamethylphosphoramide ("HMPA")
- a catalyst Y which is selected from formula 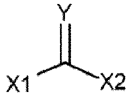 wherein Y is O or S, and
   - XI, X2, are each independently selected from halogen, C1-C10 alkyl, C3-C10 cycloalkyl, C6-C12 aryl, C6-C12 aralkyl, 5 to 10-membered heteroaryl, OR³, SiR⁶R⁷R⁸, wherein said alkyl and aryl groups are optionally substituted by one to three R⁹ groups
      or
   - X1 and X2 = -CR^{a}R^{b} form together with the carbon atom to which they are attached a 3 to 10-membered cycloalkyl, optionally substituted by one to three R⁹ groups and R^{a}, R^{b} are each independently selected from H, halogen, C1-C10 alkyl, C3-C10 cycloalkyl, C6-C12 aryl, C6-C12 aralkyl, 5 to 10-membered heteroaryl, OR¹⁰, wherein said alkyl and aryl groups are optionally substituted by one to three R⁹ groups
      or
   - X1 and X2 = NR^{a}R^{b} with R^{a} and R^{b}, each independently selected from H, halogen, C1-C10 alkyl, C3-C10 cycloalkyl, C6-C12 aryl, C6-C12 aralkyl, 5 to 10-membered heteroaryl, OR¹⁰, wherein said alkyl and aryl groups are optionally substituted by one to three R⁹ groups
      or
   - XI is selected from halogen, C1-C10 alkyl, C3-C10 cycloalkyl, C6-C12 aryl, C6-C12 aralkyl, 5 to 10-membered heteroaryl, OR³, SiR⁶R⁷R⁸ and X2 = NR^{a}R^{b} with R^{a} and R^{b}, each independently selected from H, halogen, C1-C10 alkyl, C3-C10 cycloalkyl, C6-C12 aryl, C6-C12 aralkyl, 5 to 10-membered heteroaryl, OR¹⁰, wherein said alkyl and aryl groups are optionally substituted by one to three R⁹ groups
      or
   - X1 and X2 = NR^{c} form together with the carbon atom to which they are attached a 3 to 10-membered heterocycloalkyl, optionally substituted by one to three R⁹ groups and R^{c} is selected from H, halogen, C1-C10 alkyl, C3-C10 cycloalkyl, C6-C12 aryl, C6-C12 aralkyl, 5 to 10-membered heteroaryl, OR¹⁰, wherein said alkyl and aryl groups are optionally substituted by one to three R⁹ groups
      or
   - X1 = -CR^{a}R^{b} with R^{a}, R^{b} are each independently selected from H, halogen, C1-C10 alkyl, C3-C10 cycloalkyl, C6-C12 aryl, C6-C12 aralkyl, 5 to 10-membered heteroaryl, OR¹⁰ and X2 = NR^{c} form together with the carbon atom to which they are attached a 3 to 10-membered heterocycloalkyl, optionally substituted by one to three R⁹ groups with R^{c} selected from H, halogen, C1-C10 alkyl, C3-C10 cycloalkyl, C6-C12 aryl, aralkyl, 5 to 10-membered heteroaryl, OR¹⁰, wherein said alkyl and aryl groups are optionally substituted by one to three R⁹ groups
   wherein
   R³ is H, C1-C6 alkyl, C6-C10 aryl, C6-C12 aralkyl;
   R⁶, R⁷, R⁸ are each independently selected from H, OR³, C1-C6 alkyl, C6-C10 aryl, C6-C12 aralkyl ;
   R⁹ is selected from halogen, C1-C10 alkyl, C3-C10 cycloalkyl, C6-C12 aryl, C6-C12 aralkyl, 5 to 10-membered heteroaryl, OR¹⁰, NO₂, NR¹¹R¹², CN, C(=O)R¹⁰, C(=O)OR¹⁰, S(=O)CH₃, wherein said alkyl and aryl groups are optionally substituted by one or more halogen or C1-C10 alkyl or OR³ ;
   R¹⁰ is H, C1-C6 alkyl, C6-C10 aryl, C6-C12 aralkyl; and
   R¹¹, R¹² are each independently selected from H, or C1-C10 alkyl.

In an embodiment of the present invention, the said mixture of claimed branched hydrogen carrier compound(s), proton source (e.g. water) and hydrogen release initiator and optional catalyst C is characterised by a hydrogen release initiator / [(-SiH-) plus (-Si-Si-) bonds] molar ratio which is superior or equal to 0.01. In an embodiment of the present invention, the said mixture of claimed branched hydrogen carrier compound(s), proton source (e.g. water) and hydrogen release initiator is characterised by a hydrogen release initiator / [(-SiH-) plus (-Si-Si-) bonds] molar ratio which is comprised between 0.05 and 3, for example between 0.05 and 0.35.

In an embodiment of the present invention, the said mixture of claimed branched hydrogen carrier compound(s), proton source (e.g. water), optional hydrogen release initiator and catalyst C is characterised by a molar ratio of the catalyst C relative to the [(-SiH-) plus (-Si-Si-) bonds] in the claimed branched hydrogen carrier compound(s) which ranges from 0.01 to 0.5. Preferably the molar ratio of the catalyst C relative to the [(-SiH-) plus (-Si-Si-) bonds] in the claimed branched hydrogen carrier compound(s)ranges from 0.02 to 0.1. More preferably the molar ratio of the catalyst C relative to the [(-SiH-) plus (-Si-Si-) bonds] in the claimed branched hydrogen carrier compound(s) is lower than 0.05, e.g equal to 0.04.

For the purpose of the above calculations of the initiator and catalyst C to [(-SiH-) plus (-Si-Si-) bonds]molar ratios, when the chosen compound falls at the same time under the hydrogen release initiator definition and the catalyst C definition, it is its total amount which is used for both ratios.

### Silica

In another embodiment of the present invention, it has also been discovered that the claimed branched hydrogen carrier compounds can be produced from silica compound and/or silicate compound without substantial carbon emissions, sometimes without carbon emissions.

The silica compound according to the present invention can be defined as a silica containing compound, and/or a mixture of two or more of said silica containing compounds.

In an embodiment according to the present invention, the silica compound is selected from:
• a silica compound of generic formula SiO_{2,x}H₂O,
• [SiO₂]ₙ with n superior or equal to 2, or
- a mixture of two or more of said silica compounds.

The silicate compound according to the present invention can be defined as a silicate containing compound, and/or a mixture of two or more of said silicate containing compounds.

In an embodiment according to the present invention, the silicate compound is selected from:
• a sodium or potassium silicate compound of generic formula Na₂ₓSiO₂₊ₓ or K₂ₓSiO₂₊ₓ with x being an integer comprised between 0 and 2, or
• a silicic acid compound of generic formula [SiOₓ(OH)₄₋ₓ]^{x-} with x being an integer comprised between 0 and 4 or of generic formula [SiOₓ(OH)₄₋₂ₓ]ₙ with when n=1, x=0 or 1 and when n=2, x=1/2 or 3/2, or
• a silicate compound with a polymeric structure such as a disilicate ion of structure (Si₂O₇)⁶⁻ or a macroanion of generic structure [SiO₃²⁻]ₙ, [Si₄O₁₁⁶⁻]ₙ or [Si₂O₅²⁻]ₙ with n superior or equal to 2, or
- a mixture of two or more of said silicate compounds.

It has also been discovered that the claimed branched hydrogen carrier compound(s) can be regenerated from silica compounds and/or silicate compound without substantial carbon emissions, sometimes without carbon emissions. One of the most important advantages of the production/regeneration processes of the present invention consist in the possibility to apply it continuously; such continuous process can also, as explained hereafter, be operated without requiring raw materials input and/or without by-product emissions.

### Process for producing the claimed branched hydrogen carrier compounds

The present invention also relates to a process for producing the claimed branched hydrogen carrier compounds from silica compound and/or silicate compound without substantial carbon emissions, sometimes without carbon emissions.

Although the silica and/or silicate compound (B) as defined hereunder is a preferred source for the starting material for the process for producing the claimed branched hydrogen carrier compounds according to the present invention, silica and/or other silicate containing minerals such as e.g. zircon, jade, mica, quartz, cristobalite, sand etc... can advantageously be used as source of starting material for the process for producing the claimed branched hydrogen carrier compounds. For the purposes of the present invention and appended claims, the silica and/or silicate compound (B) is preferably a silica compound and/or a silicate compound produced from the hydrolytic oxidation of the claimed branched hydrogen carrier compound(s) according to the present invention.

### Process for regenerating the claimed branched hydrogen carrier compounds

The present invention also relates to a process for regenerating the claimed branched hydrogen carrier compounds, said process comprising the step of hydrolytic oxidation of the claimed branched hydrogen carrier compounds for the production of hydrogen and silica and/or silicate compound (B), and the step of conversion of said silica and/or silicate compound (B) into the claimed branched hydrogen carrier compounds, said process only requiring hydrogen and/or water and/or silicon and/or oxygen and/or carbon as additional reactant(s) and/or without substantial carbon emissions, sometimes without carbon emissions.

The production and regeneration of the claimed branched hydrogen carrier compounds according to the present invention is further detailed and explained in the following description. Having managed to develop corresponding processes without substantial carbon emissions, sometimes without carbon emissions, represents a breakthrough in the field of hydrogen energy, hydrogen transport and hydrogen for the automotive industry.

### Hydrogen production

The present invention also relates to a method for the production of hydrogen by hydrolytic oxidation of the claimed branched hydrogen carrier compound(s) in the presence of a proton source. E.g water is preferred proton source for the hydrolytic oxidation of the claimed branched hydrogen carrier compound.

In an embodiment of the hydrogen production method according to the present invention, the presence of a solvent is tolerated; any solvent can be used for example diethylether, tetrahydrofuran, methyltetrahydrofuran, cyclohexane, methylcyclohexane, dichloromethane, pentane, heptane, toluene, decahydronaphtalene; pentane and dichloromethane being particularly preferred.

In an embodiment according to the present invention, the method for the production of hydrogen is characterised in that the proton source/[(-SiH-) plus (-Si-Si-) bonds] molar ratio is superior or equal to 0.1. In an embodiment of the present invention, the said mixture of the claimed branched hydrogen carrier compound(s) and proton source is characterised by a proton source /[(-SiH-) plus (-Si-Si-) bonds] molar ratio which is comprised between 1 and 10, for example between 1 and 3.

In an optional embodiment of the present invention, the method for the production of hydrogen is characterised in the presence of at least one hydrogen release initiator during the hydrolytic oxidation of the claimed branched hydrogen carrier compound(s) in the presence of proton source. There is no restriction regarding the type of hydrogen release initiator which can be used according to the present invention as long as it favours the hydrolytic oxidation of the claimed branched hydrogen carrier compound(s) ; and thus the proton source / claimed branched hydrogen carrier compound(s) reaction leading to the corresponding hydrogen release. For example, any compound which will favour the hydrolytic oxidation of the claimed branched hydrogen carrier compound(s)can advantageously be used as hydrogen release initiator; useful hydrogen release initiators have already been defined hereinabove.

In an optional embodiment of the present invention, the said mixture of the claimed branched hydrogen carrier compound(s), proton source and hydrogen release initiator (and optional catalyst C as explained hereinafter) is characterised by a hydrogen release initiator / /[(-SiH-) plus (-Si-Si-) bonds] molar ratio which is superior or equal to 0.01. In an embodiment of the present invention, the said mixture of the claimed branched hydrogen carrier compound(s), the proton source and hydrogen release initiator is characterised by a hydrogen release initiator /[(-SiH-) plus (-Si-Si-) bonds] molar ratio which is comprised between 0.05 and 3, for example between 0.05 and 0.35.

In an optional embodiment of the present invention, the method for the production of hydrogen is characterised in the presence of a mixture of the claimed branched hydrogen carrier compound(s), proton source, a hydrogen release initiator as defined above and another catalyst named as catalyst C. There is no restriction regarding the type of catalyst C which can be used according to the present invention as long as it increases the kinetic (i.e. the speed at which the hydrogen is released) of the hydrolytic oxidation of the claimed branched hydrogen carrier compound(s) ; and thus the proton source /claimed branched hydrogen carrier compound(s)/hydrogen release initiator/catalyst C reaction leading to the corresponding hydrogen release. For example, any compound which will significantly increase the kinetic of the hydrolytic oxidation of the claimed branched hydrogen carrier compound(s)can advantageously be used as catalyst C; useful catalysts C have already been defined hereinabove.

In an embodiment of the present invention, the said mixture of the claimed branched hydrogen carrier compound(s), proton source, optional hydrogen release initiator and catalyst C is characterised by a molar ratio of the catalyst relative to the [(-SiH-) plus (-Si-Si-) bonds] which ranges from 0.01 to 0.5. Preferably the molar ratio of the catalyst C relative to the [(-SiH-) plus (-Si-Si-) bonds] ranges from 0.02 to 0.1. More preferably the molar ratio of the catalyst C relative to the [(-SiH-) plus (-Si-Si-) bonds]is lower than 0.05, e.g equal to 0.04.

The present invention also relates to the use of the claimed branched hydrogen carrier compound(s) for the production of hydrogen.

There is no restriction regarding the methods which can be used for the hydrogen production method according to the present invention as long as the hydrogen release from the claimed hydrogen carrier compound(s) and preferably from the proton source (e.g. water)/hydrogen carrier compound(s) reacting mixture may not require additional energy and satisfies the hydrogen industry requirements.

In an embodiment according to the present invention, the method for the production of hydrogen from the claimed branched hydrogen carrier compound(s) can tolerate the presence of a solvent. There is no restriction regarding the type of solvent which can be used for the hydrogen production method according to the present invention as long as the hydrogen release from the claimed hydrogen carrier compounds satisfies the hydrogen industry requirements. In an embodiment according to the present invention, said solvent is selected from alcohol (e.g. methanol), aqueous solvents, organic solvents and/or a mixture of two or more of said solvents. For the purpose of the hydrogen production process according to the present invention, said solvent is considered as a reagent.

In an embodiment according to the present invention, the reaction mixture used in the method for the production of hydrogen from the claimed branched hydrogen carrier compound(s) is characterised in that
- the claimed branched hydrogen carrier compound(s),
- the corresponding silicate-type by-products,
- hydrogen,
- the proton source (e.g. water),
- the optional hydrogen release initiator(s), and
- the optional catalyst C, and
- the optional solvents
represent at least 90 percent by weight of the said reaction mixture, preferably at least 95 percent by weight, for example at least 99 percent by weight.

In an embodiment, the present invention also relates to a device for producing hydrogen according to the method hereabove described, said device comprising a reaction chamber comprising:
- a reaction mixture inlet, said mixture comprising the claimed branched hydrogen carrier compounds and an optional solvent;
- an hydrogen outlet;
- optionally a by-product collector ; and
- optionally a surface intended to be in contact with said mixture, coated with a polymer supported catalyst as described hereabove.

### Production of the claimed branched hydrogen carrier compound(s) and regeneration of the claimed branched hydrogen carrier compound(s)

As explained hereinabove, one of the objectives of the present invention are also to produce the claimed branched hydrogen carrier compound(s), preferably the liquid one, and to regenerate them by recycling the by-products issued from the hydrogen production, environmentally friendly and/or without substantial carbon emissions, sometimes without carbon emissions.

Thus, the present invention relates to a process for producing the claimed branched hydrogen carrier compound(s), preferably the liquid one, from silica compound and/or silicate compound, preferably from silica and/or silicate compound (B).

The present invention also relates to a process for regenerating the claimed branched hydrogen carrier compounds, said process comprising the step of hydrolytic oxidation of the claimed branched hydrogen carrier compounds for the production of hydrogen and silica and/or silicate compound(s) (B), and the steps of conversion of said silica and/or silicate compound(s) (B) into the claimed branched hydrogen carrier compounds, preferably the same claimed branched hydrogen carrier compounds, preferably the liquid ones.

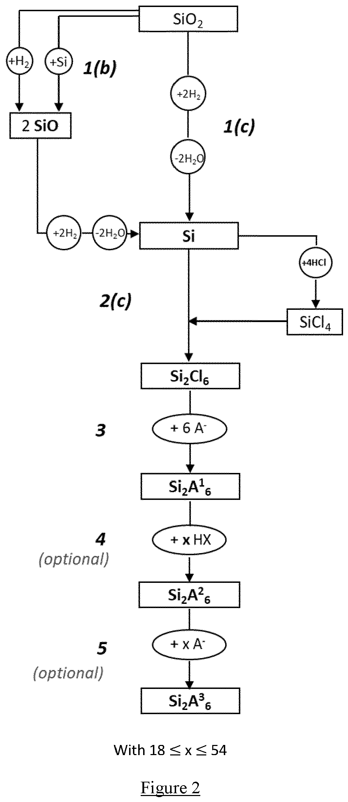

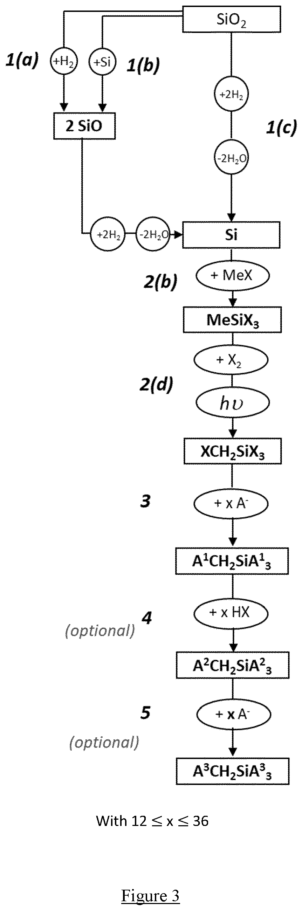

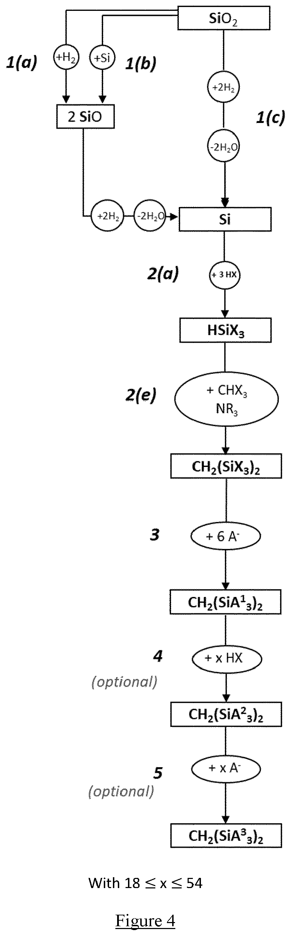

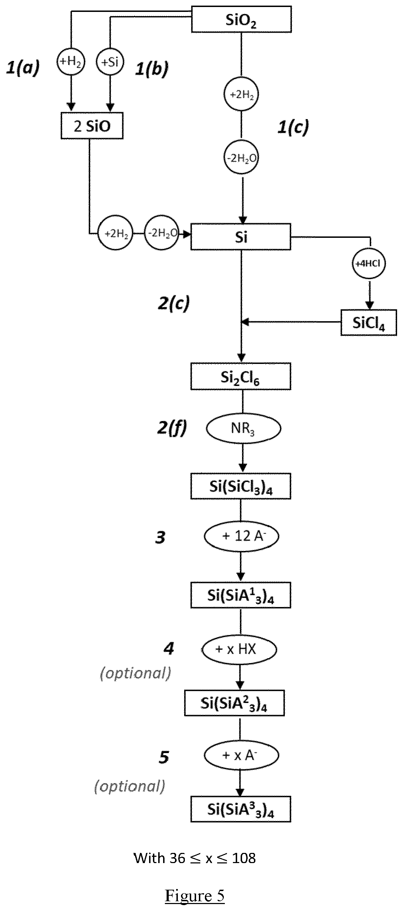

In an embodiment according to the present invention, the above process for the regeneration of the liquid claimed branched hydrogen carrier compound(s) is characterized in that the regenerated claimed branched hydrogen carrier compound(s) are preferably substantially the same as the starting claimed branched hydrogen carrier compound(s), preferably exactly the same.
Figure 1
   In an embodiment of the present invention, which is illustrated in with 3 ≤ x ≤ 36
   Figure 1, the process for the production or regeneration of the claimed branched hydrogen carrier compound(s) comprises the following consecutive steps:
   ∘ either subjecting the silica compound and/or silicate compound to a hydrogen-assisted reduction step 1(a) to produce SiO and subjecting SiO to a hydrogenation step to produce silicon, or
   ∘ mixing the silica compound and/or silicate compound with Si in step 1(b) to produce SiO and subjecting SiO to a hydrogenation step to produce silicon, or
   ∘ subjecting the silica compound and/or silicate compound to a hydrogen-assisted reduction step 1(c) to produce silicon,
      - Then
   ∘ Subjecting silicon to a halogenation step (2a) to produce RₙSiX₄₋ₙ
      - Then
   ∘ Subjecting RₙSiX₄₋ₙ to a branching step (3) to produce Rₙ**Si**A¹₄₋ₙ
   ∘ Optionally subjecting Rₙ**Si**A¹₄₋ₙ to a halogenation step (4) to produce Rₙ**Si**A²₄₋ₙ
   ∘ Optionally subjecting Rₙ**Si**A²₄₋ₙ to a branching step (5) with x A⁻ to produce Rₙ**Si**A³₄₋ₙ
   ∘ Optionally repeating the halogenation step (4) and/or branching step (5).
Figure 2
   In an embodiment of the present invention, which is illustrated in Figure 2, the process for the production or regeneration of the claimed branched hydrogen carrier compound(s) comprises the following consecutive steps:
   ∘ either subjecting the silica compound and/or silicate compound to a hydrogen-assisted reduction step 1(a) to produce SiO and subjecting SiO to a hydrogenation step to produce silicon, or
   ∘ mixing the silica compound and/or silicate compound with Si in step 1(b) to produce SiO and subjecting SiO to a hydrogenation step to produce silicon, or
   ∘ subjecting the silica compound and/or silicate compound to a hydrogen-assisted reduction step 1(c) to produce silicon,
      - Then
   ∘ Subjecting silicon to a hydrochlorination step 2(c) to produce SiCl₄ and mixing SiCl₄ with Si to produce hexachlorodisilane **Si**₂Cl₆
      - Then
   ∘ Subjecting **Si**₂Cl₆ to a branching step (3) to produce **Si₂**A¹₆
   ∘ Optionally subjecting **Si₂**A¹₆ to a halogenation step (4) to produce **Si₂**A²₆
   ∘ Optionally subjecting **Si₂**A²₆ to a branching step (5) to produce **Si₂**A³₆
   ∘ Optionally repeating the halogenation step (4) and/or branching step (5).
Figure 3
   In an embodiment of the present invention, which is illustrated in Figure 3, the process for the production or regeneration of the claimed branched hydrogen carrier compound(s) comprises the following consecutive steps:
   ∘ either subjecting the silica compound and/or silicate compound to a hydrogen-assisted reduction step 1(a) to produce SiO and subjecting SiO to a hydrogenation step to produce silicon, or
   ∘ mixing the silica compound and/or silicate compound with Si in step 1(b) to produce SiO and subjecting SiO to a hydrogenation step to produce silicon, or
   ∘ subjecting the silica compound and/or silicate compound to a hydrogen-assisted reduction step 1(c) to produce silicon,
      - Then
   ∘ Subjecting silicon to a methylhalogenation step 2(b) to produce Me**Si**X₃
      - Then
   ∘ Subjecting MeSiX₃ to a halogenation step 2(d) to produce XCH₂**Si**X₃
      - Then
   ∘ Subjecting XCH₂**Si**X₃ to a branching step (3) with to produce A¹CH₂**Si**A¹₃
   ∘ Optionally subjecting A¹CH₂**Si**A¹₃ to a halogenation step (4) to produce A²CH₂**Si**A²₃
   ∘ Optionally subjecting A²CH₂**Si**A²₄₋ₙ to a branching step (5) to produce A³CH₂**Si**A³₃
   ∘ Optionally repeating the halogenation step (4) and/or branching step (5).
Figure 4
   In an embodiment of the present invention, which is illustrated in Figure 4, the process for the production or regeneration of the claimed branched hydrogen carrier compound(s) comprises the following consecutive steps:
   ∘ either subjecting the silica compound and/or silicate compound to a hydrogen-assisted reduction step 1(a) to produce SiO and subjecting SiO to a hydrogenation step to produce silicon, or
   ∘ mixing the silica compound and/or silicate compound with Si in step 1(b) to produce SiO and subjecting SiO to a hydrogenation step to produce silicon, or
   ∘ subjecting the silica compound and/or silicate compound to a hydrogen-assisted reduction step 1(c) to produce silicon,
      - Then
   ∘ Subjecting silicon to a hydrohalogenation step 2(a) to produce HSiX₃
      - Then
   ∘ Subjecting H**Si**X₃ to a alkylhalogenation step 2(e) for the production of CH₂(**Si**X₃)₂
      - Then
   ∘ Subjecting CH₂(**Si**X₃)₂ to a branching step 3 to produce CH₂(**Si**A¹₃)₂
   ∘ Optionally subjecting CH₂(**Si**A¹₃)₂ to a halogenation step 4 to produce CH₂(**Si**A²₃)₂
   ∘ Optionally subjecting CH₂(**Si**A²₃)₂ to a branching step 5 to produce CH₂(**Si**A³₃)₂
   ∘ Optionally repeating the halogenation step (4) and/or branching step (5).
Figure 5
   In an embodiment of the present invention, which is illustrated in With 36 ≤ x ≤ 108
   Figure 5, the process for the production or regeneration of the claimed branched hydrogen carrier compound(s) comprises the following consecutive steps:
   ∘ either subjecting the silica compound and/or silicate compound to a hydrogen-assisted reduction step 1(a) to produce SiO and subjecting SiO to a hydrogenation step to produce silicon, or
   ∘ mixing the silica compound and/or silicate compound with Si in step 1(b) to produce SiO and subjecting SiO to a hydrogenation step to produce silicon, or
   ∘ subjecting the silica compound and/or silicate compound to a hydrogen-assisted reduction step 1(c) to produce silicon,
      - Then
   ∘ Subjecting silicon to a hydrochlorination step 2(c) to produce SiCl₄ and mixing SiCl₄ with Si to produce hexachlorodisilane **Si**₂Cl₆
      - Then
   ∘ Subjecting hexachlorodisilane **Si**₂Cl₆ to a disproportionation step 2(f) to produce **Si**(SiCl₃)₄
      - Then
   ∘ Subjecting **Si**(SiCl₃)₄ to a branching step 3 to produce **Si**(SiA¹₃)₄
   ∘ Optionally subjecting **Si**(SiA¹₃)₄ to a halogenation step 4 to produce **Si**(SiA²₃)₄
   ∘ Optionally subjecting **Si**(SiA²₃)₄ to a branching step 5 to produce **Si**(SiA³₃)₄
   ∘ Optionally repeating the halogenation step (4) and/or branching step (5).
Figure 6
   In an embodiment of the present invention, which is illustrated in Figure 6, the process for the production or regeneration of the claimed branched hydrogen carrier compound(s) comprises the following consecutive steps:
   ∘ either subjecting the silica compound and/or silicate compound to a hydrogen-assisted reduction step 1(a) to produce SiO and subjecting SiO to a hydrogenation step to produce silicon, or
   ∘ mixing the silica compound and/or silicate compound with Si in step 1(b) to produce SiO and subjecting SiO to a hydrogenation step to produce silicon, or
   ∘ subjecting the silica compound and/or silicate compound to a hydrogen-assisted reduction step 1(c) to produce silicon,
      - Then
   ∘ Subjecting silicon to a hydrochlorination step 2(g) to produce H₂**Si**X₂
      - Then
   ∘ Subjecting H₂**Si**X₂ to a controlled hydrolysis step 2(h) to produce XH₂SiO-(H₂SiO)ₘ-SiH₂X
      - Then
   ∘ Subjecting XH₂SiO-(H₂SiO)ₘ-SiH₂X to a branching step 3 to produce A¹H₂SiO-(H₂SiO)ₘ-SiH₂A¹
   ∘ Optionally subjecting A¹H₂SiO-(H₂SiO)ₘ-SiH₂A¹ to a halogenation step 4 to produce A²H₂SiO-(H₂SiO)ₘ-SiH₂A²
   ∘ Optionally subjecting A²H₂SiO-(H₂SiO)ₘ-SiH₂A² to a branching step 5 to produce A³H₂SiO-(H₂SiO)ₘ-SiH₂A³
   ∘ Optionally repeating the halogenation step (4) and/or branching step (5).

### Step 1(a) - Reduction of silica/silicate type products to form silicon monoxide (SiO)

Any appropriate method can be used for the reduction of silica/silicate type products to form silicon monoxide (SiO). In an embodiment according to the present invention, said reduction is performed in one stage. In an embodiment according to the present invention, said reduction is performed at high temperatures, for example above 1500 °C.

For example, in an embodiment according to the present invention, the silica/silicate compound is reduced in the presence of hydrogen gas for the production of SiO as exemplified by the following equation: SiO₂ + H₂ -> SiO + H₂O Other gas(es) can optionally be employed in addition to hydrogen, e.g. an inert gas such as argon or nitrogen. The reaction can be performed either with both reactants in the gas phase, in a plasma jet for example, or in a heterogeneous manner by reacting the solid silica/silicate compound with hydrogen gas, in a fluidised bed reactor for example.

Reaction in the gas phase is preferred. The H₂/SiO₂ molar ratio is preferably comprised between 0.1 and 1000, for example between 1 and 50. A heat source is preferably used; any source of heat can be selected, e.g. hot oil, steam, electric arc technology, induction heating, microwave, hot filament, plasma technology. In an embodiment, a cooling source may be used too to trap desired species; any appropriate cooling source can be selected e.g. water cooler, oil cooler, brine cooler, special heat exchanger .... Heat may advantageously be recovered to heat up reactors from other steps, and/or to heat up plant facilities, and/or to produce electricity etc... In addition to the main reaction according to this step 2(a) which leads to compound SiO, other compounds may also be produced, e.g. H₂SiO, and/or HSi(O)(OH), and/or H₂Si(OH)₂, and/or SiH₄, and/or Si; the production of Si is considered as a side reaction, i.e. represented by the full reduction reaction leading to elemental silicon, as exemplified by the following equation: SiO₂ + 2 H₂ -> Si + 2 H₂O. Said Si, when produced, can advantageously be used in the following disproportionation step 2(b).

### Step 1(b) - Elemental silicon mediated disproportionation of silica/silicate type products to form silicon monoxide (SiO)

Any appropriate method can be used for the disproportionation step 1(b) to produce SiO. For example, in an embodiment according to the present invention, the step 1(b) consists in the reduction of the silica/silicate compound in the presence of elemental silicon for the production of SiO as exemplified by the following equation: SiO₂ + Si -> 2 SiO. The Si/SiO₂ molar ratio is preferably comprised between 0.5 and 1.5, for example between 0.9 and 1.1. Any source of elemental silicon can be used, e.g. metallurgical, photovoltaic or electronic grade silicon. In an embodiment according to the present invention, elemental silicon is preferably produced by full reduction of the silica/silicate compound by hydrogen as exemplified by the following equation: SiO₂ + 2 H₂ -> Si.

In an embodiment according to the present invention, a catalyst may be added to the SiO₂/Si mixture in order to facilitate the said disproportionation. Any appropriate catalyst can be used to facilitate the said disproportionation, for example a metal, an ore or an organic compound.

In an embodiment according to the present invention, an additive may be added to the SiO₂/Si mixture in order to facilitate the said disproportionation. For example, organic binders, fillers etc... can be used. In an embodiment according to the present invention, said disproportionation is performed at high temperatures, for example above 1500 °C.

In an embodiment according to the present invention, said disproportionation is performed under reducing atmosphere, for example in the presence of hydrogen gas.

Other gas(es) can optionally be employed, e.g. an inert gas such as argon or nitrogen. Since this reaction is endothermic, a heat source is preferably used; any source of heat can be selected, e.g. hot oil, steam, electric arc technology, induction heating, microwave, hot filament, plasma technology.

### Step 1(c) - Reduction of silica/silicate type products to form Si

In an embodiment according to the present invention, there is provided a method for the reduction of the silica/silicate compound in the presence of hydrogen gas for the production of elemental silicon. The elemental silicon produced can be either metallurgical or photovoltaic grade. Other gas(es) can optionally be employed in addition to hydrogen, e.g. an inert gas such as argon or nitrogen. Since the reaction of reduction of silica/silicate compounds by hydrogen is endothermic, a heat source is required; any source of heat can be selected, e.g. electric arc technology, induction heating, microwave, hot filament, plasma technology. Plasma is particularly preferred; for example, a corresponding plasma technology can advantageously comprise a plasma torch allowing to create a plasma jet. The plasma jet is preferably made from hydrogen gas, with or without additional gas(es) (such as, for example, argon), going through electrodes. Silica can be introduced into the hydrogen plasma jet under vacuum prior to react in the gas phase with hydrogen at a temperature comprised between 2000 and 20 000 °K to form silicon and water. Silicon is then condensed and recovered as a solid.

The reduction reaction of silica/silicate compounds by hydrogen gas produces water as by-product. The formed water can advantageously be used as chemical reactant, and/or as heating source for other utilities and/or can be transformed in an electrolyser to reform hydrogen gas and/or can be used to run a steam turbine to produce electricity.

### Step 2(a): RnSiX4-n formation

In an embodiment according to the present invention, there is provided a method for **RₙSiX₄₋ₙ formation.** The hydrohalogenation or the alkyhalogenation of the elemental silicon are preferred. In an embodiment according to the present invention, there is provided a method for the hydrohalogenation of the elemental silicon for the production of halosilanes, e.g. monohalosilane (H₃SiX), dihalosilane (H₂SiX₂), trihalosilane (HSiX₃) and/or tetrahalosilane (SiX₄), or a mixture of these compounds (X being a halide). Elemental silicon used in the hydrohalogenation step is preferably originating from the previous step of the process. Hydrogen chloride (HCl) is a preferred hydrogen halide source for the said hydrohalogenation of the elemental silicon into monochlorosilane (H₃SiCl), dichlorosilane (H₂SiCl₂) and/or trichlorosilane (HSiCl₃) and/or tetrachlorosilane (SiCl₄); said hydrogen chloride can advantageously be an aqueous solution or a gas. In the case where hydrogen chloride is used, a process can be designed in order to redistribute HSiCl₃, which is the main product of the silicon hydrochlorination reaction, through a catalysed dismutation reaction into a mixture of H₃SiCl, H₂SiCl₂, HSiCl₃ and SiCl₄. SiCl₄ can advantageously be recycled via reduction by hydrogen gas in the presence of elemental silicon into a mixture of H₂SiCl₂, HSiCl₃ and SiCl₄. Elemental silicon used in the SiCl4 reduction step is preferably originating from the previous step of the process. Hydrogen gas used in the SiCl₄ reduction step can advantageously be a by-product of another step of the process, for e.g. from the elemental silicon hydrohalogenation step mentioned above.

In an embodiment according to the present invention, there is provided a method for the formation of alkylhalide silane from the elemental silicon e.g. MeSiX₃, Me₂SiX₂, Me₃SiX, SiX₄. Methylchloride (MeCl) is a preferred alkyl halide source for the said alkylhalogenation of the elemental silicon. When MeCl is used as alkylhalide source MeSiCl₃, Me₂SiCl₂, Me₃SiCl, SiMe₄ compounds are obtained. In an embodiment according to the present invention, a catalyst may be used to enhance the performances of the said alkylhalogenation, for example a metal, a metal immobilized on a support, an ore or an organic compound. Copper (Cu) is a preferred catalyst for the said reaction. The catalyst may optimally contain promoter metals to facilitate the reaction e.g. zinc, Tin magnesium, calcium, arsenic, bismuth, cadmium.

### Step 2(c): Silicon chlorosilylation step

In an embodiment according to the present invention, there is provided a method for the chlorosilylation of silicon for the production of hexachlorodisilane. Elemental silicon used is preferably originating from the previous step of the process. Tetrachlorosilane used in the silicon chlorosilylation step is preferably originating from the previous step 2(a) of figures 1 or 4. In an embodiment according to the present invention, a catalyst may be used to enhance the performances of the said chlorosilylation. Amines are preferred catalyst for the said reaction, more preferably tertiary amines e.g. trimethylamine, triethylamine, tri-n-butylamine.

### Step 2(d): Methyltrihalosilane halogenation step

In an embodiment according to the present invention, there is provided a method for the halogenation of methyltrihalosilane. Gaseous chlorine (Cl₂) is preferred halide source for the production of chloromethyltrichlorosilane. Free-radical halogens may be generated to enhance the performance of the said halogenation. UV irradiation, visible irradiation, or high temperature (300-400°C) are preferred for free-radical halogens generation.

### Step 2(e): Hydrohalosilylation of halomethyl

In an embodiment according to the present invention, there is provided a method for the hydrohalosilylation of halomethyl for the production of bis(trihalosilyl)methane. Chloromethyl is a preferred halomethyl source and trichlorosilane is a preferred halosilane source for the production of bis(trichlorosilyl)methane. In an embodiment according to the present invention, a catalyst may be used to enhance the performances of the said hydrochlorosilylation. Amines are preferred catalyst for the said reaction, more preferably tertiary amines e.g. triethylamine, tri-n-butylamine.

### Step 2(f): Disproportionation of hexachlorodisilane

In an embodiment according to the present invention, there is provided a method for the disproportionation of hexachlorodisilane in the presence of amine to produce dodecachloroneopentasilane (neo-Si₅Cl₁₂). Hexachlorodisilane used is preferably originating from the step 2(e) of the process of figure 4. Tertiary amines are preferred for the disproportionation reaction, more preferably trimethylamine (NMe₃).

### Step 2(g): Hydrohalogenation of elemental silicon

In an embodiment according to the present invention, there is provided a method for the hydrohalogenation of the elemental silicon for the production of dihalosilane (H₂SiX₂). Elemental silicon used in the hydrohalogenation step is originating from the previous step of the process. Hydrogen chloride (HCl) is a preferred hydrogen halide source for the said hydrohalogenation of the elemental silicon into dichlorosilane (H₂SiCl₂); said hydrogen chloride can advantageously be an aqueous solution or a gas. In the case where hydrogen chloride is used, a process can be designed in order to redistribute HSiCl₃, which is the main product of the silicon hydrochlorination reaction, through a catalysed dismutation reaction into a mixture of H₃SiCl, H₂SiCl₂, HSiCl₃ and SiCl₄. Several subsequent separation and purification steps may allow to isolate pure H₂SiCl₂ (or generically H₂SiX₂ with X being a halogen) which can be directly consumed in the next step 2(h) of the process.

### Step 2(h): Controlled hydrolysis of halosilanes

In an embodiment according to the present invention, there is provided a method for the controlled hydrolysis of halosilanes by water to produce/regenerate the siloxane hydrogen carrier compounds. In the case where H₂SiCl₂ is used as halosilane source for the said controlled hydrolysis, HCl is formed as by-product. The formed HCl can advantageously be reinjected in the step 4 of the process. In the case where H₂SiF₂ is used as halosilane source for the said controlled hydrolysis, HF is formed as by-product. Said hydrolysis can advantageously be performed under operating conditions characterised in that the molar ratio [H₂O / H₂SiX₂] is inferior to 0.99, preferably inferior to 0.98; in an embodiment of the present invention, this ratio is superior to 0.2, preferably superior to 0.25, for example higher than 0.3. Said hydrolysis can advantageously be performed under controlled atmosphere, for example atmosphere of argon, nitrogen... Said hydrolysis can advantageously be performed in the presence of a solvent. Any solvent can be used, e.g. diethylether, tetrahydrofuran, methyltetrahydrofuran, cyclohexane, methylcyclohexane, dichloromethane, pentane, heptane, toluene, decahydronaphtalene; pentane and dichloromethane being particularly preferred. Said hydrolysis can advantageously be performed under operating conditions characterised in that the volume of solvent per weight of H₂SiX₂ is inferior to 10, preferably inferior to 8. Said hydrolysis can advantageously be performed under operating conditions characterised in that the speed of addition of water into the reacting medium is higher than 0,05 mL/min, preferably higher than 0,075 mL/min. Said hydrolysis can advantageously be performed under operating conditions characterised in that the volume of solvent per weight of water is lower than 50 mL/g, preferably lower than 45 mL/g. Said hydrolysis is exothermic, the temperature of the reacting medium is thus preferably maintained during the reaction between -50 and +100 °C, for example between -50 and +50 °C, more preferably between -40 and 30°C.

An illustrative example of an equation showing the chemical equilibrium occurring during the step 2(h) of the present invention is depicted hereafter

y x (m + 1) H₂SiCl₂ + (y x m) H₂O → y Cl-(H₂SiO)ₘ-SiH₂Cl + 2 x (y x m) HCl wherein y and m are integers, y x (m + 1) being the number of H₂SiCl₂ molecules in the reacting medium, (y x m) the number of water molecules in the reacting mixture, y the number of polymer chain of composition Cl-(H₂SiO)ₘ-SiH₂Cl with m being the number of (H₂SiO) repeating units and 2 x (y x m) the number of HCl molecules produced.

### Step 3: Branching step:

In an embodiment according to the present invention, there is provided a method for branching RₙSiX₄₋ₙ, Si₂Cl₆, XCH₂SiX₃, CH₂(SiX₃)₂, Si(SiCl₃)₄, XH₂SiO-(H₂SiO)ₘ-SiH₂X, with a silyl anion to form, respectively, RₙSiA¹₄₋ₙ, Si₂A¹₆, A¹CH₂SiA¹₃, CH₂(SiA¹₃)₂, Si(SiA¹₃)₄, A¹H₂SiO-(H₂SiO)ₘ-SiH₂A¹. The silyl anion can be generated with the help a chemical base, for example, by SiH₃ abstraction from neopentasilane (Si₅H₁₂), 2,2,4,4-tetrasilylpentasilane (Si₉H₂₀), 2,2,5,5-tetrasilylhexasilane (Si₁₀H₂₂) or by SiCl₃ abstraction from dodecachloroneopentasilane Si(SiCl₃)₄ or by Si(OEt) abstraction from dodecamethoxyneopentasilane (Si₅(OEt)₁₂), or by chloride abstraction from Cl-(H₂SiO)ₘ-SiH₂Cl. In the cases where SiH₃ is abstracted from neopentasilane (Si₅H₁₂), 2,2,4,4-tetrasilylpentasilane (Si₉H₂₀), 2,2,5,5-tetrasilylhexasilane (Si₁₀H₂₂), the silyl anions (SiH₃)₃Si⁻, (SiH₃)₃Si-Si(H₂)-(SiH₃)₂Si⁻, (SiH₃)₃Si-SiH₂-SiH₂- (SiH₃)₂Si⁻ are preferably obtained, respectively. In the case where SiCl₃ is abstracted from dodecachloroneopentasilane Si(SiCl₃)₄ the silyl anion Si(SiCl₃)₃⁻ is preferably obtained. In the case where Si(OEt) is abstracted from dodecamethoxyneopentasilane (Si₅(OEt)₁₂), the silyl anion Si(Si(OEt)₃)₃⁻ is preferably obtained. Methyl lithium (MeLi), potassium ter-butoxide(tBuOK), sodium ter-butoxide or lithium ter-butoxide are preferred bases for generation of silyl anions. In the case where Cl is abstracted from Cl-(H₂SiO)ₘ-SiH₂Cl, the silyl radical Cl(H₂SiO)ₘ-SiH₂˙ is formed. Any appropriate chloride abstraction agent can be used. For example elemental sodium can be used as chloride abstraction agent.

### Step 4: Halogenation step (optional)

In an embodiment according to the present invention, there is provided a method for the halogenation of RₙSiA¹₄₋ₙ, Si₂A¹₆, A¹CH₂SiA¹₃, CH₂(SiA¹₃)₂, Si(SiA¹₃)₄, A¹H₂SiO-(H₂SiO)ₘ-SiH₂A¹. Hydrogen chloride (HCl) or tin tetrachloride (SnCl₄) are preferred halide sources for the said halogenation. In the case where tin tetrachloride is used, hydrogen chloride is formed and can advantageously be recycled for step 2(a) or 2(c). In the case where hydrogen chloride is used, 1,2,3-trichloroneopentasilane is formed as a by-product and can be used to form branched polysilane

### Step 5: Branching step (optional)

In an embodiment according to the present invention, there is provided a method for branching of RₙSiA²₄₋ₙ, Si₂A²₆, A²CH₂SiA²₃, CH₂(SiA²₃)₂, Si(SiA²₃)₄, A²H₂SiO-(H₂SiO)ₘ-SiH₂A² with a silyl anion to form RₙSiA³₄₋ₙ, Si₂A³₆, A³CH₂SiA³₃, CH₂(SiA³₃)₂, Si(SiA³₃)₄, Si(SiA³₃)₄, A³H₂SiO-(H₂SiO)ₘ-SiH₂A³. The silyl anion can be generated with the help a chemical base, for example, by SiH₃ abstraction from neopentasilane (Si₅H₁₂), 2,2,4,4-tetrasilylpentasilane (Si₉H₂₀), 2,2,5,5-tetrasilylhexasilane (Si₁₀H₂₂) or by SiCl₃ abstraction from dodecachloroneopentasilane Si(SiCl₃)₄ or by Si(OEt) abstraction from dodecamethoxyneopentasilane (Si₅(OEt)₁₂), or by chloride abstraction from Cl-(H₂SiO)ₘ-SiH₂Cl. In the cases where SiH₃ is abstracted from neopentasilane (Si₅H₁₂), 2,2,4,4-tetrasilylpentasilane (Si₉H₂₀), 2,2,5,5-tetrasilylhexasilane (Si₁₀H₂₂), the silyl anions (SiH₃)₃Si⁻, (SiH₃)₃Si-Si(H₂)-(SiH₃)₂Si⁻, (SiH₃)₃Si-SiH₂-SiH₂- (SiH₃)₂Si⁻ are preferably obtained, respectively. In the case where SiCl₃ is abstracted from dodecachloroneopentasilane Si(SiCl₃)₄ the silyl anion Si(SiCl₃)₃⁻ is preferably obtained. In the case where Si(OEt) is abstracted from dodecamethoxyneopentasilane (Si₅(OEt)₁₂), the silyl anion Si(Si(OEt)₃)₃⁻ is preferably obtained. Methyl lithium (MeLi), potassium ter-butoxide(tBuOK), sodium ter-butoxide or lithium ter-butoxide are preferred bases for generation of silyl anions. In the case where Cl is abstracted from Cl-(H₂SiO)ₘ-SiH₂Cl, the silyl radical Cl-(H₂SiO)ₘ-SiH₂˙ is formed. Any appropriate chloride abstraction agent can be used. For example, elemental sodium can be used as chloride abstraction agent.

## Claims

1. Hydrogen carrier compound selected amongst 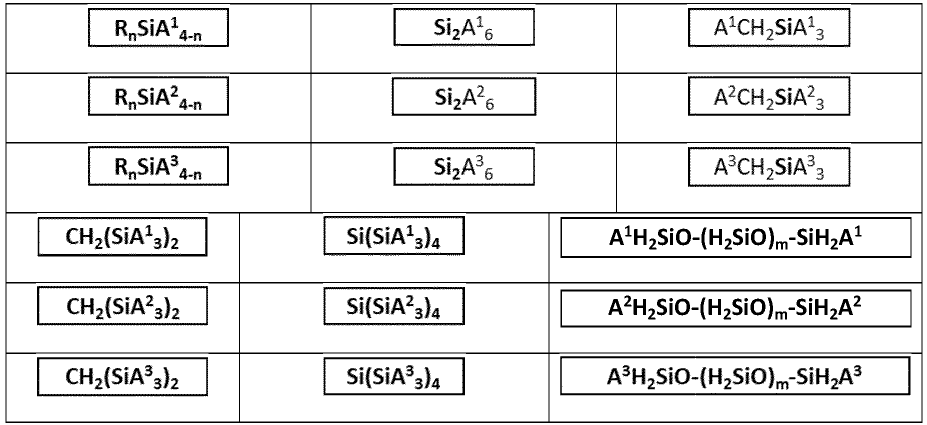 wherein
R can be any of hydrogen or a radical having up to 50 carbon atoms chosen amongst alkyl, aryl and aralkyl,
n can be any of 0, 1, 2 or 3,
m is any integer comprised between 1 and 100,
wherein A¹ is selected from 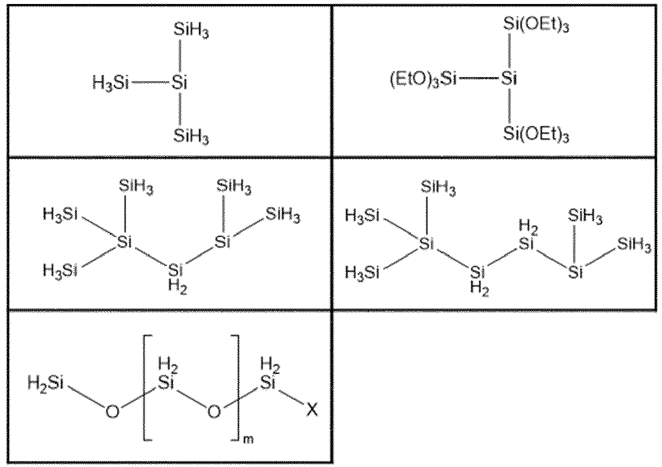 wherein A² is selected from 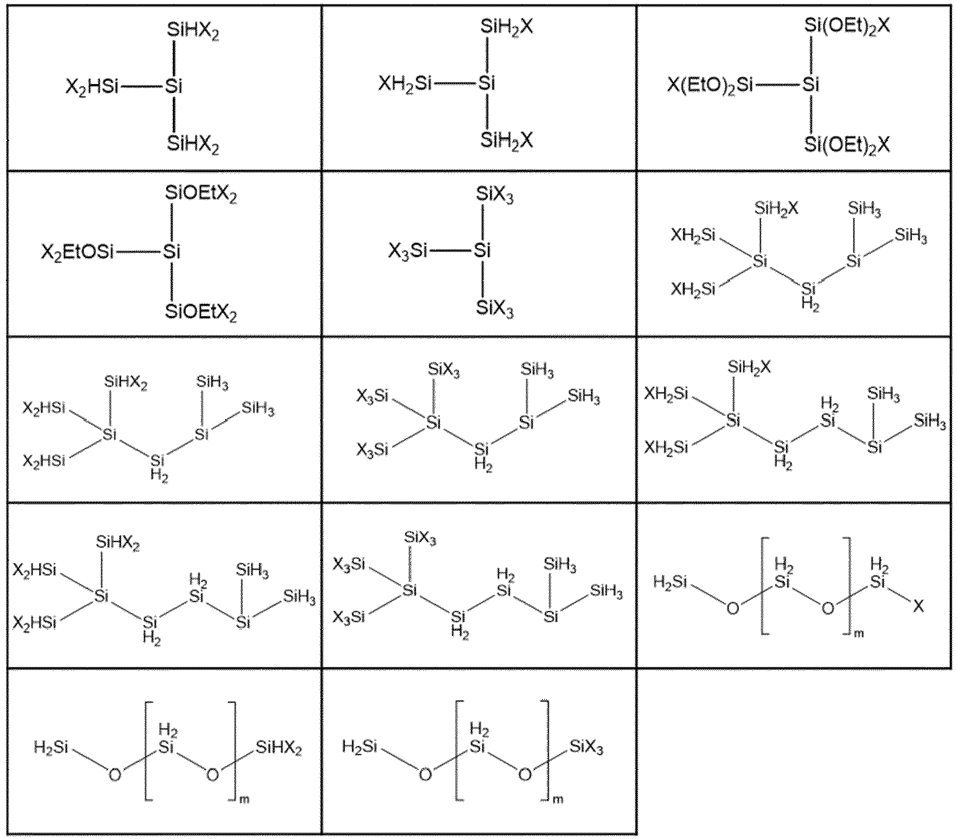 wherein X in A¹ or A² can be any halide, for example any of a chloride, a bromide, a fluoride, or an iodide,
wherein A³ is selected from 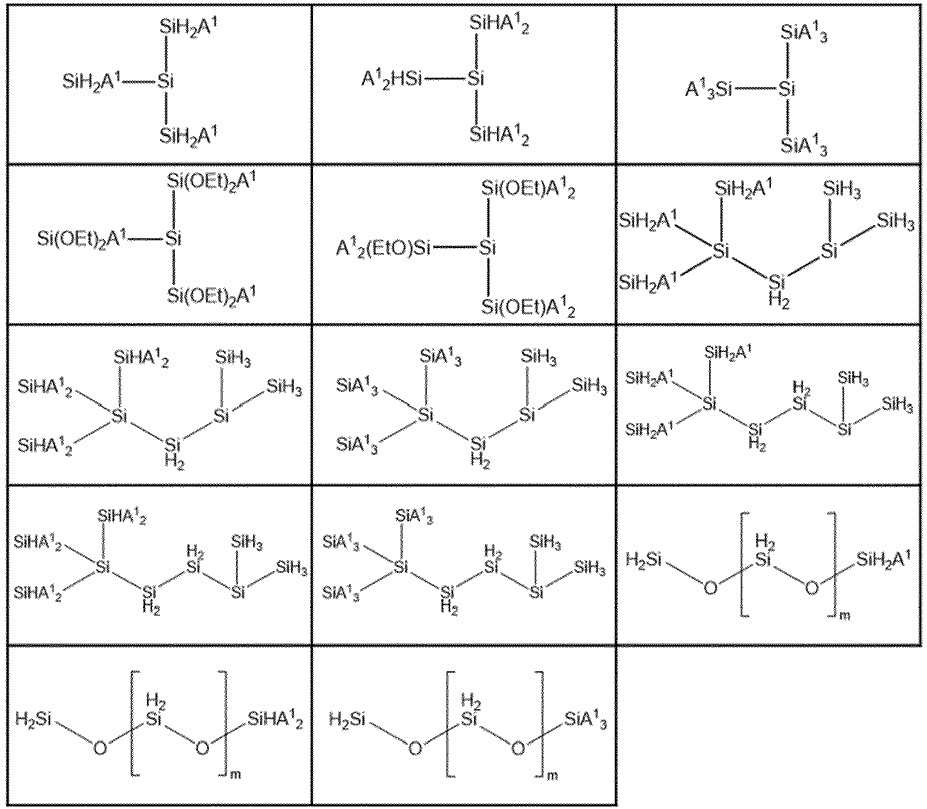 and wherein m in A¹, A² or A³ is any integer comprised between 1 and 100, or a mixture of two or more of these compounds.

2. Hydrogen carrier compound according to claim 1 and selected amongst HₙSiA¹₄₋ₙ; HₙSiA²_{4-n.}; HₙSiA³₄₋ₙ; (CH₃)ₙSiA¹₄₋ₙ; (CH₃)ₙSiA²_{4-n.}; (CH₃)ₙSiA³₄₋ₙ ; CH₂(SiA¹₃)₂; CH₂(SiA²₃)₂; CH₂(SiA³₃)₂; Si₂A¹₆; Si₂A²₆ ; Si₂A³₆; Si(SiA¹₃)₄; Si(SiA¹₃)₄; Si(SiA¹₃)₄;
or a mixture of two or more of these compounds, with A¹, A² and A³ selected from
| A¹ | A² | A³ |
|---|---|---|
| 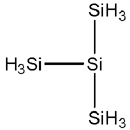 | 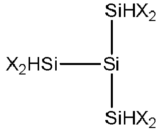 | 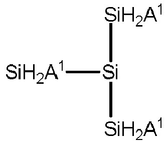 |
| | 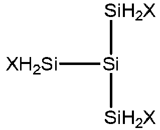 | 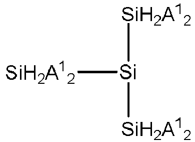 |
| | 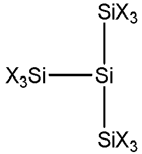 | 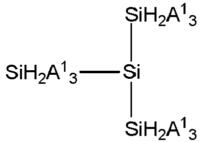 |
wherein n can be any of 0, 1, 2 or 3, and X can be any halide, for example any of a chloride, a bromide, a fluoride, or an iodide.

3. Hydrogen carrier compound according to claim 1 and selected amongst 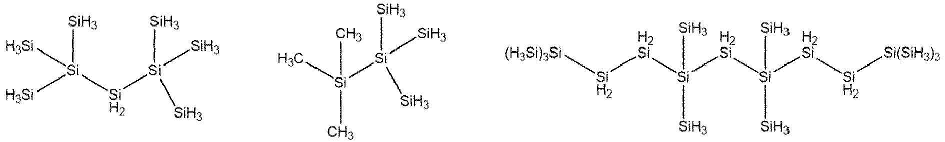 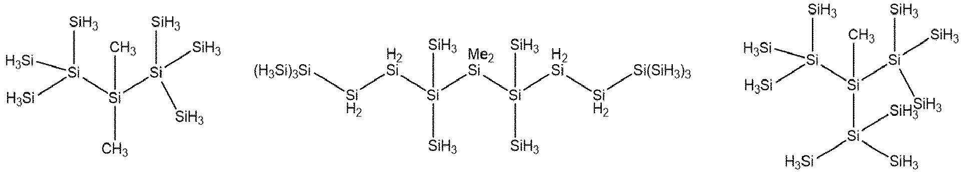 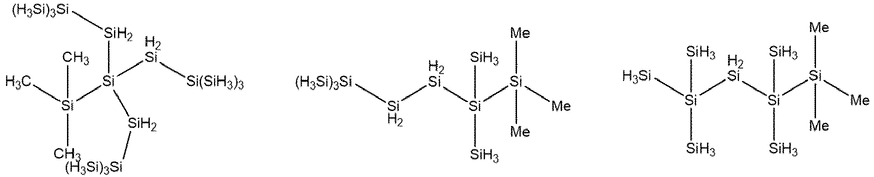 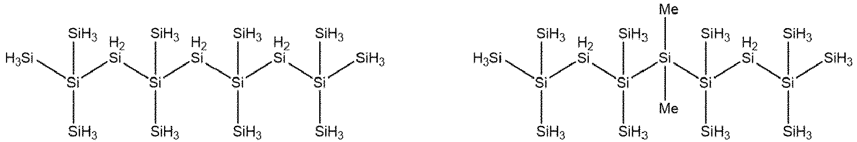 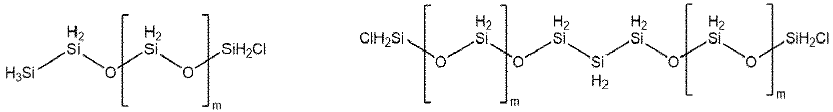 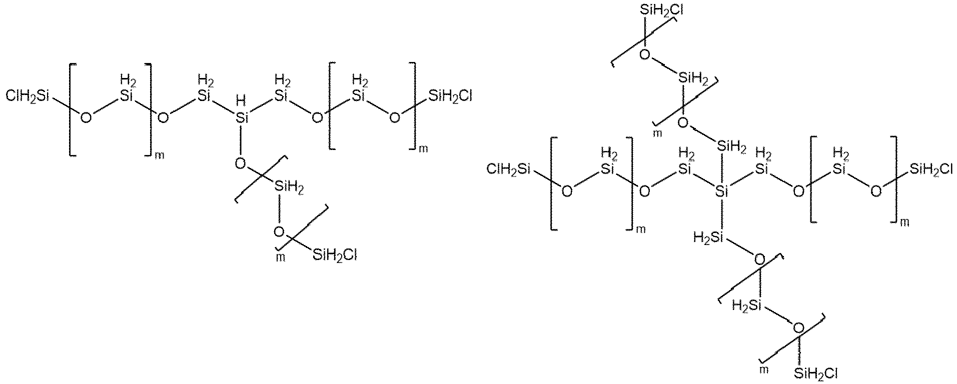 or a mixture of two or more of these compounds.

4. Hydrogen carrier compound according to claim 1 and selected amongst 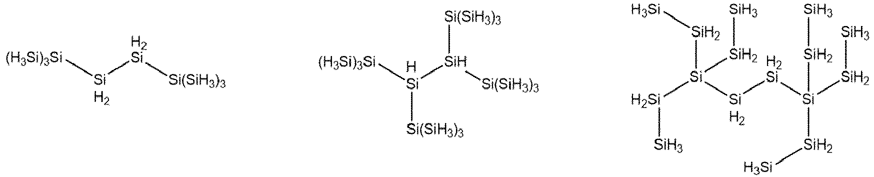 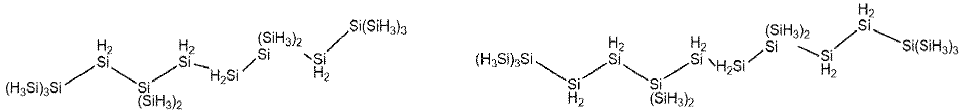 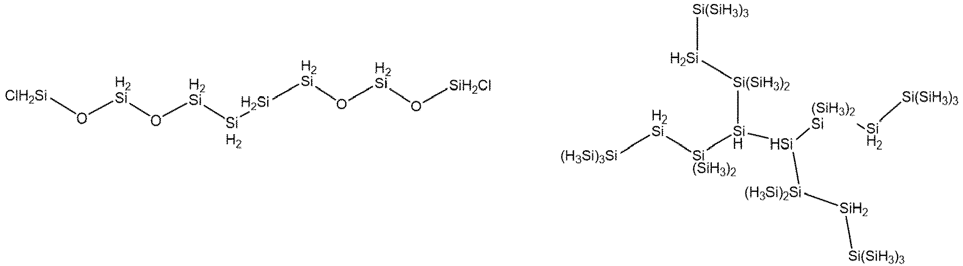 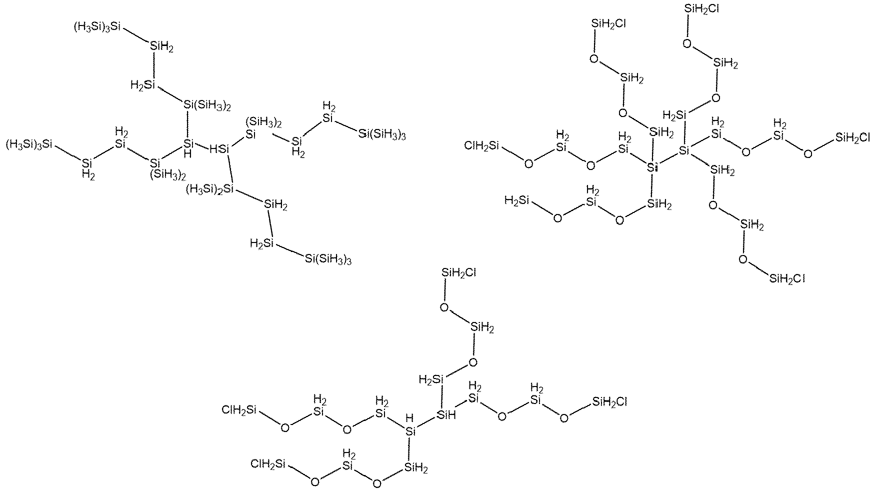 or a mixture of two or more of these compounds.

5. Hydrogen carrier compound according to claim 1 and selected amongst 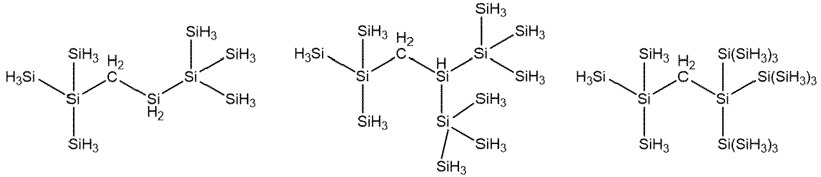 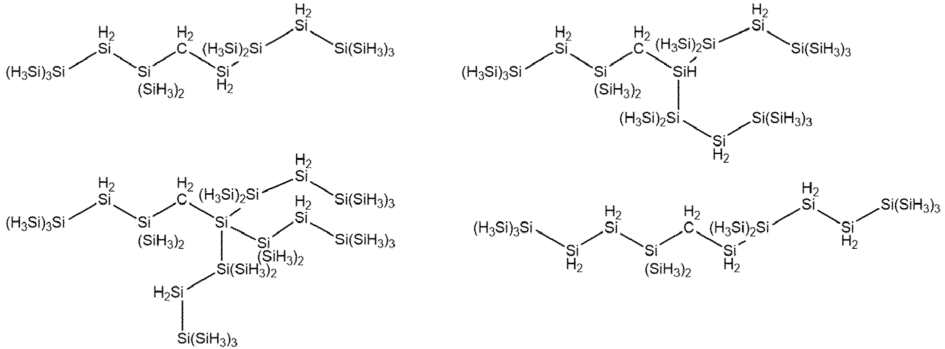 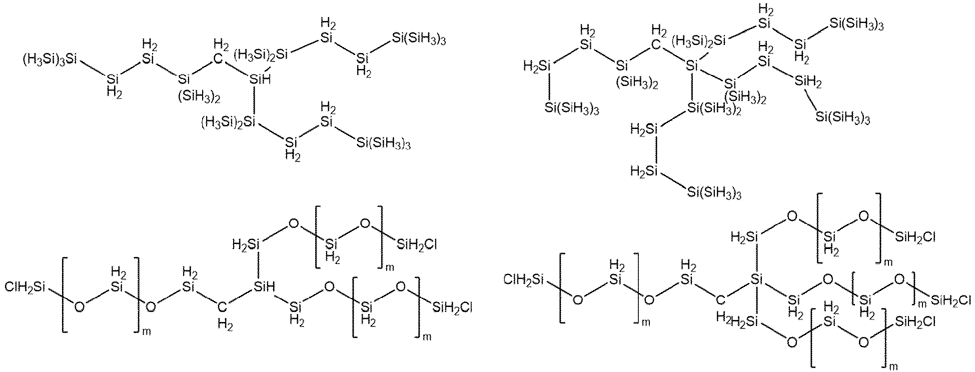 or a mixture of two or more of these compounds.

6. Hydrogen carrier compound according to claim 1 and selected amongst 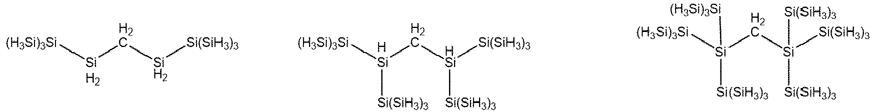 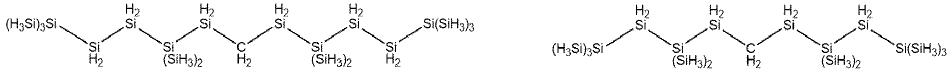 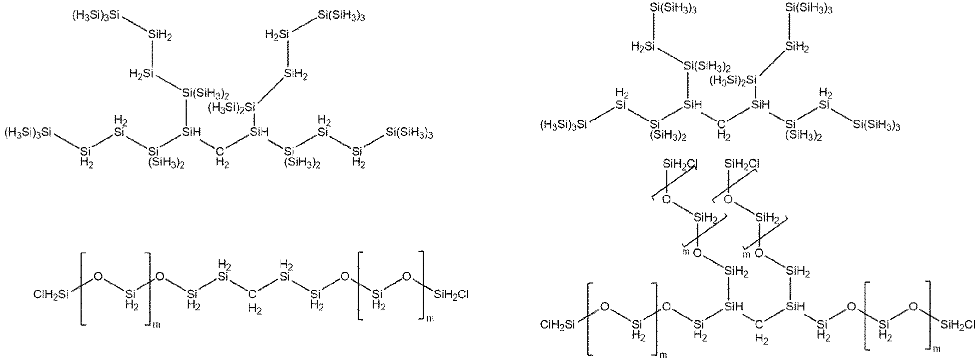 or a mixture of two or more of these compounds.

7. Hydrogen carrier compound according to claim 1 and selected amongst 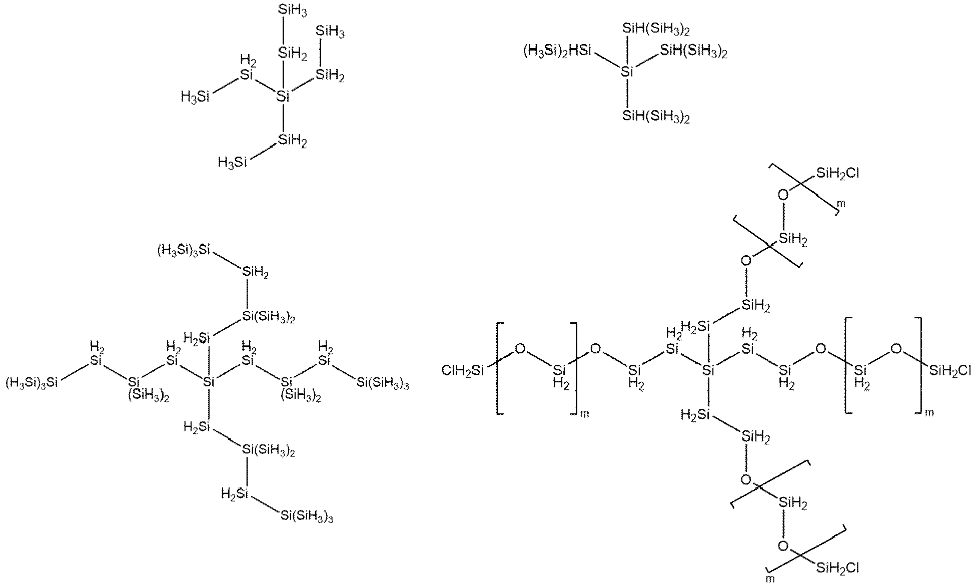 or a mixture of two or more of these compounds.

8. Hydrogen carrier compound according to claim 1 and selected amongst 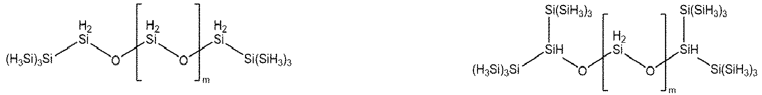 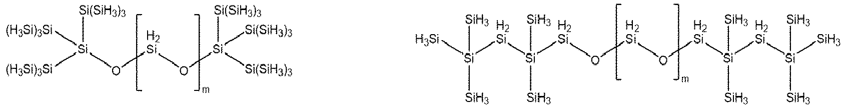 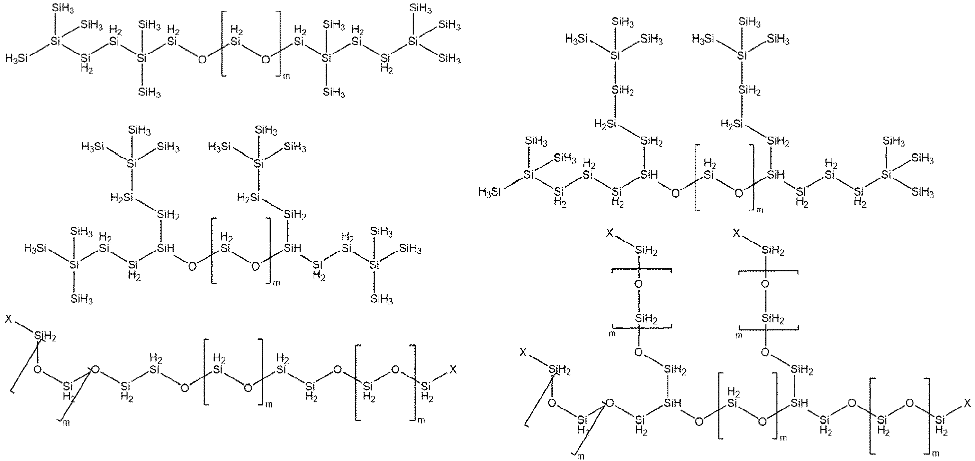 wherein m is any integer comprised between 1 and 100,
or a mixture of two or more of these compounds.

9. Hydrogen carrier compounds according to any of the preceding claims **characterised by** a molecular weight ranging from 152 to 10 212 g/mol.

10. Method for the production of hydrogen by hydrolytic oxidation of any of the hydrogen carrier compounds of any of the preceding claims in the presence of a proton source.

11. Method according to claim 10 wherein the proton source is water.

12. Method for the production of hydrogen according to any of claims 10 or 11 wherein the proton source /[(-SiH-) plus (-Si-Si-) bonds] molar ratio is comprised between 1 and 10, for example between 1 and 3.

13. Method for the production of hydrogen according to any of claims 10 to 12 in a reaction mixture which is **characterised in that**
- the branched hydrogen carrier compound of any of claims 1 to 9,
- corresponding silicate-type by-products,
- the hydrogen,
- the proton source,
- an optional hydrogen release initiator which favours the hydrolytic oxidation of the branched hydrogen carrier compound,
- an optional catalyst which increases the kinetic of the hydrolytic oxidation of the branched hydrogen carrier compound, and
- optional solvents
represent at least 90 percent by weight of the said reaction mixture.

14. Method for the production of hydrogen by hydrolytic oxidation of any of the hydrogen carrier compounds of any of claims 1 to 9 **characterised in** the use of UV light irradiation.

15. Use of a hydrogen carrier compound according to any of claims 1 to 9 for the storage and transport of hydrogen and/or energy.
